(19) Europäisches Patentamt
European Patent Office
Office européen des brevets

(11) **EP 4 787 240 A1**

(12) **EUROPEAN PATENT APPLICATION**

(43) Date of publication:
**05.08.2026 Bulletin 2026/32**

(21) Application number: **26155548.6**

(22) Date of filing: **30.01.2026**

(51) International Patent Classification (IPC):
**G06N 3/0475** (2023.01)   **G06N 3/082** (2023.01)
**G06N 3/096** (2023.01)

(52) Cooperative Patent Classification (CPC):
**G06N 3/0475; G06N 3/082; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.01.2025 US 202563751619 P**

(71) Applicant: **GDM Holding LLC
Mountain View, CA 94043 (US)**

(72) Inventors:
• **KUMAR, Sanjiv
Mountain View, 94043 (US)**
• **SINGH, Vikas
Fitchburg, WI 53711 (US)**
• **ZHANG, Li
Mountain View, 94043 (US)**
• **ADEPU, Harshavardhan
Mountain View, 94043 (US)**

(74) Representative: **Marks & Clerk GST
1 New York Street
Manchester M1 4HD (GB)**

(54) **STRUCTURED SUBSPACE FINETUNING FOR VISION AND LANGUAGE MODELS**

(57)   Methods and systems for fine-tuning a machine-learning model using a fusion-frame representation are provided. Model weights associated with a layer of a machine-learning model are updated using a projection of a block diagonal matrix into a fusion frame, with each block of the block diagonal matrix projected onto a respective subspace of the fusion frame. This reduces the number of parameters that need to be handled during fine-tuning, reducing demand on processor and memory resources, as it is not necessary to fine-tune all the weights, only the elements of the block diagonal matrix. The use of fusion frames also enables targeting of particular parameters or parameter sets using the subspaces of the fusion frame. Furthermore, embodiments described herein show how the fusion frame implementation lends itself to parallelisation of calculations associated with each respective subspace.

FIG. 1

# EP 4 787 240 A1

**Description**

FIELD OF THE INVENTION

This application relates to machine learning models and associated algorithms.

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

SUMMARY

This specification describes a system, implemented as one or more computer programs on one or more computers in one or more locations, that fine-tunes a pre-trained machine learning model for applying to a particular task, e.g. that the machine learning model has not been trained to perform.

The task may involve any kind of machine learning task. For example, the task may involve receiving any kind of digital data input and generating any kind of score, classification, or regression output based on the input. Additionally or alternatively, the task may involve processing an input sequence using a sequence processing e.g. sequence-to-sequence model neural network that comprises a sequence of neural network layers. The sequence processing model neural network, if present, may be any neural network that can process an input sequence to generate an output sequence.

The fine-tuning of the model is accomplished by updating the values of weights associated with one or more layers of the model. This updating is performed using a projection into a set of subspaces that are part of a fusion frame, allowing for coefficients associated with each subspace to be independently optimized.

According to an aspect of the present disclosure there is provided a computer-implemented method of fine-tuning weights of a machine learning model to perform a task, the method comprising: obtaining a pre-trained machine learning model comprising a layer with an associated weight matrix; obtaining training data associated with the task, the training data comprising training data elements; processing the training data elements to obtain embeddings of the training data elements; obtaining a fine-tuning matrix, wherein the fine-tuning matrix is block diagonal and comprises a plurality of blocks; obtaining a weight update matrix, wherein the weight update matrix is a product of the fine-tuning matrix with projection matrices, the projection matrices chosen to project each block of the plurality of blocks onto a respective subspace of a fusion frame; for each of the embeddings, processing the embedding using the weight matrix and the weight update matrix to obtain an output; processing the outputs to define values of an objective function; optimising the objective function by updating the elements of the fine-tuning matrix, keeping the weight matrix and the projection matrices constant, to obtain a trained fine-tuning matrix that corresponds to the optimised objective function; obtaining a trained weight update matrix, wherein the trained weight update matrix is a product of the trained fine-tuning matrix with the projection matrices; and subsequently updating the weight matrix based on the trained weight update matrix to obtain a fine-tuned weight matrix.

In embodiments, the blocks of the fine-tuning matrix may be generated and processed separately, such that the weight update matrix comprises a sum of components, each corresponding to a respective block. For each embedding, processing the embedding using the weight matrix and the weight update matrix to obtain an output may comprise multiplying the embedding by a sum of the weight matrix and each respective component of the weight update matrix in turn to obtain a respective output. Processing the outputs to define values of an objective function may comprise processing the respective outputs to define values of a respective objective function associated with each component. Optimising each respective objective function by updating the elements of the fine-tuning matrix may comprise updating only the elements of the respective block to obtain a respective trained component of the weight update matrix. Updating the weight matrix based on the trained weight update matrix may comprise adding each respective trained component of the weight update matrix to the weight matrix in turn.

The method may be implemented on a plurality of computing devices, and optimising the objective function may comprise: maintaining a shared copy of the fine-tuning matrix in a shared data store; implementing a set of workers on the plurality of computing devices, each worker being implemented on one of the computing devices, each worker being allocated a respective block, each worker being configured to: obtain a local copy of the respective block; optimise the objective function by updating only components of the respective block; and update the value of the respective block in the shared data store to the new value; and combining the new values of each block of the fine-tuning matrix to obtain the trained fine-tuning matrix.

According to a further aspect of the disclosure there is provided a machine learning model fine-tuned using the above method.

According to a further aspect of the disclosure there is provided a system comprising: one or more computers; and one or more storage devices communicatively coupled to the one or more computers, wherein the one or more storage devices store instructions that, when executed by the one or more computers, cause the one or more computers to perform the operations of the above method.

According to a further aspect of the disclosure there is provided one or more non-transitory computer storage media storing instructions that when executed by one or more computers cause the one or more computers to perform the operations of the above method.

According to a further aspect of the disclosure there is provided a method of using a machine learning model to perform a task, the method comprising: obtaining an input associated with the task; and processing the input using a machine learning model fine-tuned by the above method to generate an output that represents a result of the task.

According to a further aspect of the disclosure there is provided a method of using a machine learning model to perform a task, the method comprising: obtaining an input associated with the task; and processing the input using a machine learning model to generate an output that represents a result of the task, wherein the machine learning model has been fine-tuned by: representing an update to the model in a set of subspaces forming a fusion frame; adapting the representation using training data associated with the task; and fine-tuning the model based on the adapted representation.

Particular embodiments of the subject matter described in this specification can be implemented so as to realize one or more of the following advantages.

Machine learning models often have large numbers of parameters (such as weights) to be optimized for any particular application. The computational burden, in both memory and processor resources, to update or retrain these parameters can be significant. Methods described herein have the advantage of reducing the number of parameters that need be handled. In particular, only coefficients contained in each block of the fine-tuning matrix need be updated, with the projection matrices and original weights of the model being kept constant. In embodiments, the fine-tuning matrix and projection matrices can be generated algorithmically and deterministically at runtime and shared across the layers, increasing computational efficiency and reducing memory requirements. These advantages are enhanced if the fine-tuning matrix is chosen to be a sparse matrix.

Some implementations of the described system and method are specifically adapted to hardware acceleration, to enable rapid sequence processing e.g. sequence-to-sequence processing. Some implementations of the fine-tuning method use one or more hardware accelerator units to address blocks associated with specific subspaces. Example hardware accelerator units include a GPU (Graphics Processing Unit) or a TPU (Tensor Processing Unit). In such implementations, counter-intuitively, memory access can be a performance bottleneck. For example, for transformer/-attention-based implementations, performance can be limited by the need to store and read keys and values from memory to enable fast incremental inference. Employing sequence-level routing (i.e. selecting the adapter subnetworks based on the input sequence), rather than output token-level routing, allows the keys and values for the selected adapter subnetworks to be cached (and for the key-value caches to remain coherent) during decoding, i.e. when generating the output tokens.

The use of fusion frames provides the advantage of a large number of (in general) overlapping subspaces which may be adapted to the fine-tuning task at hand. In particular, the use of distinct subspaces allows for updating parameters across a variety of granularities and scales, including specific targeting of particular parameters or sets of parameters. Additionally, redundancy between subspaces enables robustness to noisy gradient updates during fine-tuning, including with small datasets.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

For a better understanding of the present disclosure and to show how embodiments may be put into effect, reference is made to the accompanying drawings in which:

Fig. 1 shows an example software architecture;
Figs. 2A, 2B, and 2C show further schematic representations of elements of Fig. 1;
Fig. 3 shows a flow chart of a computer-implemented method of fine-tuning weights of a machine learning model to perform a task;

Fig. 4 shows a flow chart of a further computer-implemented method of fine-tuning weights of a machine learning model to perform a task;

Fig. 5 shows a flow chart of a method of optimising an objective function; and

Figs. 6, 7, and 8 show tables of performance results of fine-tuned machine learning models.

Like reference numbers and designations in the various drawings indicate like elements.

DETAILED DESCRIPTION

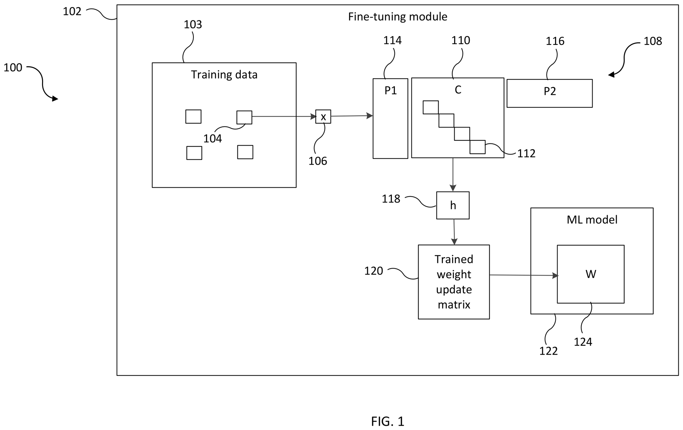

Fig. 1 shows an example software architecture 100 that may be used to implement methods disclosed herein.

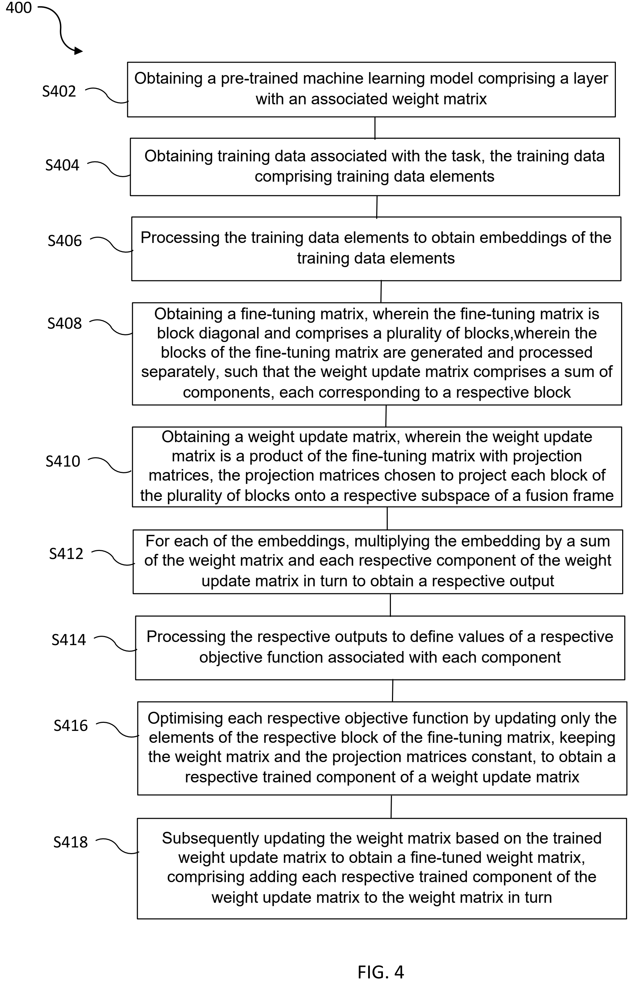

The architecture 100 comprises a fine-tuning module 102. The fine-tuning module 102 may be used to fine-tune a pre-trained machine learning (ML) model 122 to perform a task. Examples of the task are described in more detail below with reference to Fig. 4.

The ML model 122 comprises a layer with associated weights, represented in a weight matrix 124. The weight matrix 124 is also referred to herein as W. The fine-tuning module 102 fine-tunes the ML model 122 by fine-tuning the weight matrix 124.

The fine-tuning module 102 may have access to training data 103 associated with the task. The training data 103 comprises training data elements 104. The training data may, for example, be stored in a memory accessible to the fine-tuning module 102. The training data elements 104 can comprise e.g. elements of text in a natural or computer language such as words, wordpieces, or characters, or tiles of an image, or time segments of an audio waveform, and so forth.

The fine-tuning module may generate embeddings 106 from one or more of the training data elements 104 as described below.

The fine-tuning module 102 is configured to obtain a weight update matrix 108 for use in fine-tuning the weight matrix 124. The weight update matrix 108 comprises a fine-tuning matrix 110, also referred to herein as C, and one or more projection matrices 114, 116. While Fig. 1 shows two projection matrices 114, 116, also referred to herein as P1 and P2, other numbers of projection matrices may be used as preferred or needed.

The fine-tuning matrix 110 is a block diagonal matrix. The term "block diagonal" is used to refer to a matrix that is composed of a number of smaller matrices arranged corner-to-corner; that is to say, a block diagonal matrix comprises a series of square or rectangular blocks that have non-zero elements, with all other elements being zero. As used in this specification, a block diagonal matrix, and the blocks comprised therein, need not be square, but can be rectangular. Each block can have the same dimensions, or there can be a variety of dimensions between blocks. For example, ten 3 x 2 blocks may be arranged corner-to-corner to produce a 30 x 20 block diagonal matrix. Within this block diagonal matrix, each block may have some non-zero elements, but on any row or column that contains elements of a block, all elements that are not elements of that block are 0. It may also be the case that some or all elements of a given block, or of all the blocks, are 0 in a given case.

The projection matrices 114, 116 are chosen to project each block of the fine-tuning matrix onto a respective subspace of a fusion frame.

A "frame" is a term used in the field of linear algebra and refers to a basis in vector space that allows for redundancy (frames can thus provide stable representations of vectors, even when some frame elements are missing). A co-called "fusion frame" is an extension of a frame that works with subspaces instead of individual vectors, and is thus useful for analyzing subspaces; it can be considered as an additive construct of multiple, potentially "overlapping" frames. It can comprise a collection of subspaces of a Hilbert space and respective weights.

For example a fusion frame can be defined as:

$$A\left|\left|f\right|\right|^2 \leq \sum_{i \in \mathcal{I}} v_i^2 \left|\left|P_{W_i}f\right|\right|^2 \leq B\left|\left|f\right|\right|^2, \quad \forall f \in \mathcal{H}$$

where $W_i$ denotes a subspace of a set of subspaces, vi denotes a positive scalar weight of the subspace, $P_{Wi}$ is an orthogonal projection onto $W_i$ and A,B>0 are fusion frame bounds and f is a random variable in Hilbert space H.

The fusion frame may be a so-called "tight fusion frame". A tight fusion frame is one in which the frame bounds A and B are equal (so that the energy of a vector is distributed uniformly across the set of subspaces).

For example, in some implementations, the projection matrices 114, 116 may be generated deterministically using a Unit Norm Tight Frame (UNTF) construction. For example, the fine-tuning module 102 may generate a base UNTF for a smaller dimension and then modulate this base frame with roots of unity to generate a full set of subspace projections. In embodiments, this algorithmic construction may allow the projection matrices 114, 116 to be generated at runtime rather than stored in memory, and may further ensure that the resulting subspaces satisfy the properties of a tight fusion frame (where frame bounds A=B as defined above).

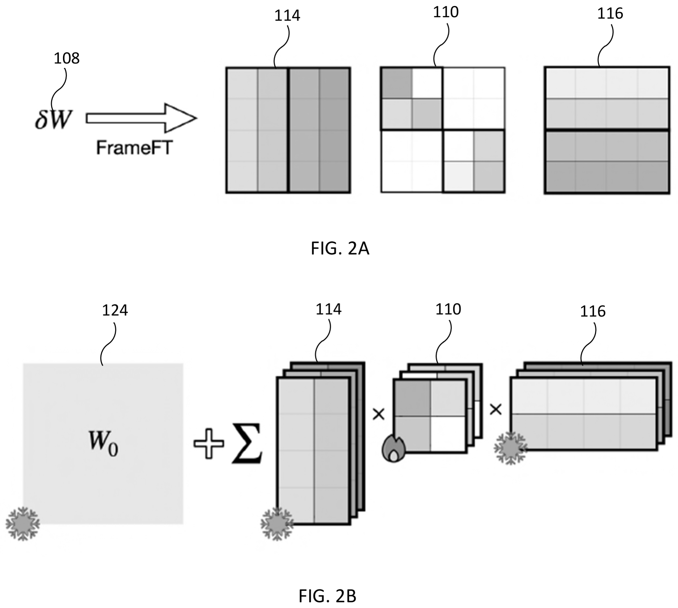

An exemplary representation of the weight update matrix 108 is shown in Fig. 2A, which further illustrates examples of the projection matrices 114, 116 and fine-tuning matrix 110. In the example of Fig. 2A, the blocks 112 of the fine-tuning matrix 110 are 2x2 matrices.

The fine-tuning module 102 may use the training data 104 and the weight update matrix 108 to generate one or more outputs 118, also referred to herein as h. The fine-tuning module 102 may use the output or outputs 118 to generate a trained weight update matrix 120. These processes are described in more detail below.

While Fig. 1 shows the operations of the architecture 100 being performed by the fine-tuning module 102, this is merely intended as an example. The operations described herein may be performed by any suitable combination of software and hardware elements, and need not necessarily be performed by a single software entity such as the fine-tuning module 102.

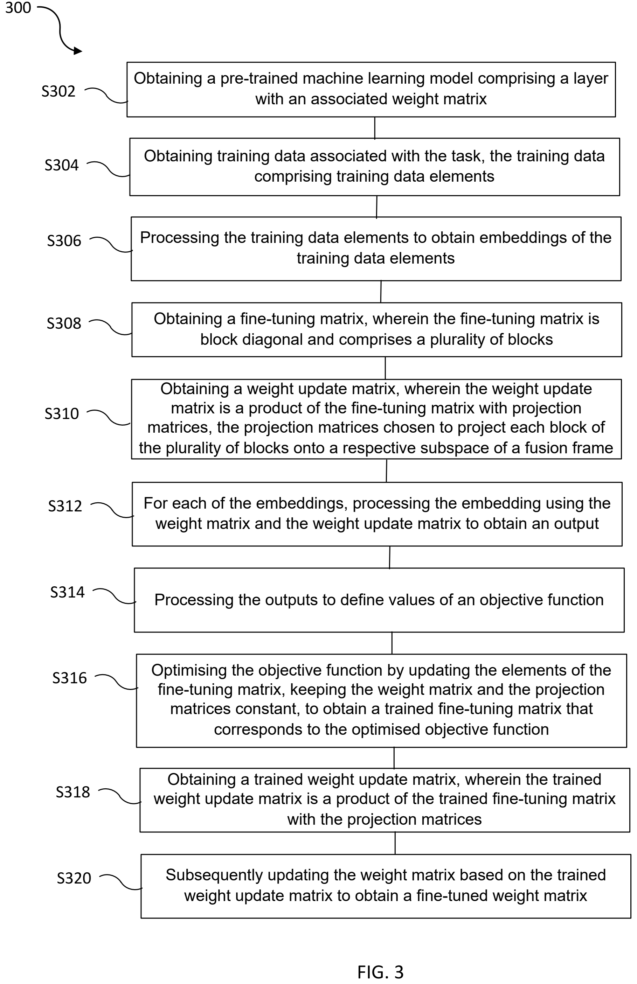

Fig. 3 shows a flow chart of a method 300 of a computer-implemented method of fine-tuning weights of a machine learning model to perform a task.

The method involves obtaining S302 a pre-trained machine learning model, e.g. a neural network, comprising a layer, e.g. a neural network layer, with an associated weight matrix W.

For example, the fine-tuning module 102 may obtain the ML model 122 with its associated weight matrix 124.

The method also involves obtaining S304 the training data 103 associated with the task. The training data comprises the training data elements 104.

For example, the machine learning model 122 can be trained using a plurality of training data items, each training data item comprising a plurality of data elements 104. For example, where the machine learning model 122 comprises a sequence processing e.g. sequence-to-sequence neural network the training data elements 104 can define tokens of a sequence used to train the sequence processing neural network.

A sequence processing neural network can be any neural network that is configured to process an input sequence to generate an output sequence. That is, a sequence processing neural network can similarly be any neural network that is configured to process an input sequence to generate an output sequence.

The training data elements 104 are processed S306 to obtain embeddings 106, referred to herein as x, of the training data elements. For example, the training data elements 104 can be processed using an encoder, e.g. a tokenizer or a neural network, to represent the training data elements 104 as a sequence of tokens.

Throughout this specification, an "embedding" of an entity (e.g., an observation of an environment) can refer to a representation of the entity as an ordered collection of numerical values, e.g., a vector or matrix of numerical values. An embedding of an entity can be generated, e.g., as the output of a neural network that processes data characterizing the entity, or as a result of some other encoding process.

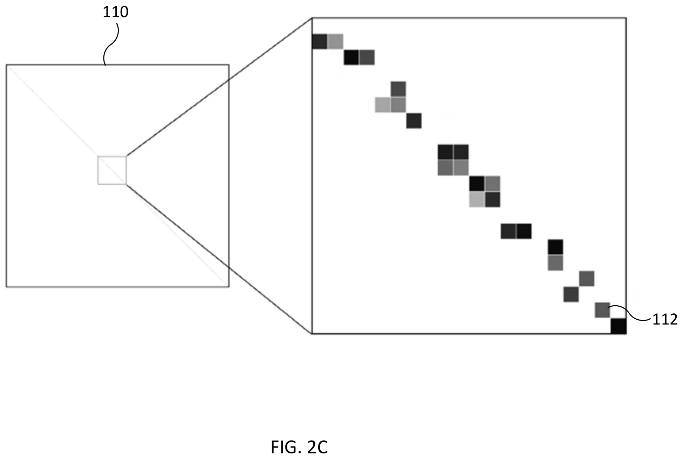

The method 300 obtains S308 the fine-tuning matrix 110, C. The fine-tuning matrix 110 is block diagonal and comprises a plurality of blocks 112. This is further illustrated schematically in Fig. 2C. In the example of Fig. 2C, the blocks 112 are 2x2 matrices.

In some implementations obtaining the fine-tuning matrix 110 may comprise randomly generating the fine-tuning matrix 110, e.g. by randomly initializing each block.

In some implementations obtaining the fine-tuning matrix 110 may comprise generating the fine-tuning matrix 110 based on a random sparsity pattern. This can involve randomly selecting a small subset of entries in each diagonal block to be non-zero, and distributing them uniformly across the blocks 112. Each block can be sparse by defining a majority of its elements to be zero, in implementations greater than 75% or 90% of its elements.

Each block of the plurality of blocks 112 is projected onto a respective subspace of a fusion frame. This can be done by operating on the fine-tuning matrix with projection matrices 114, 116 ($P_1$, $P_2$). This product is referred to herein as a weight update matrix $P_1 C P_2$ 108. The weight update matrix 108 is obtained at S310.

Each embedding 106, x may be processed S312 using the weight matrix 124, W and the weight update matrix 108, $P_1 C P_2$ to obtain an output 118, $h$. For example, the output 118, $h$ may be given by $Wx + P_1 C P_2 x$.

The outputs 118, $h$ obtained from each embedding 106, $x$ are processed S314 to define values of an objective function. The objective function can be any objective function suitable for learning the task, e.g. using supervised or unsupervised learning, e.g. a cross-entropy loss, a contrastive loss, an MSE loss and so forth.

Merely to illustrate, as one example when training an LLM or VLM, the model may be trained using a softmax cross entropy loss, e.g. using language model style teacher forcing with a softmax cross entropy loss. As another example the model may be trained with an autoregressive negative log likelihood (NLL) loss, $-\sum_{l=1}^{L} \log p(y_l | y_{<l}, x_{\leq l})$ for a multimodal input comprising a sequence of text encoded as L tokens with the $l$th text token $y_l$ conditioned on preceding image or audio token inputs $x_{\leq l}$, such as one or more images or videos, and conditioned on preceding text tokens $y_{<l}$. As a further example the model may be trained with a masking loss, e.g. a loss that requires the model to predict masked-out data such as masked out text tokens.

The method 300 further involves optimising S316 the objective function by updating the elements of the fine-tuning matrix 110, C, keeping the weight matrix 124, W, and the projection matrices 114, 116 ($P_1$, $P_2$) constant, to obtain a trained fine-tuning matrix 120, C' that corresponds to the optimised objective function.

Since the weight update matrix 108 has the form $P_1CP_2$, updating the elements of C to C' changes the value of the weight update matrix 108, $P_1CP_2$ as well, which assumes a new value referred to as the trained weight update matrix 120, $P_1C'P_2$. That is, the method obtains S318 a trained weight update matrix 120, $P_1C'P_2$, wherein the trained weight update matrix 120, $P_1C'P_2$ is a product of the trained fine-tuning matrix C' with the projection matrices 114, 116 ($P_1$, $P_2$).

Once the trained weight update matrix 120, $P_1C'P_2$, has been obtained, the method updates S320 the weight matrix 124, W, based on the trained weight update matrix 120, $P_1C'P_2$, to obtain a fine-tuned weight matrix W'. For example, W' may be given by W + $P_1C'P_2$. Alternatively, $P_1C'P_2$ may be scaled by any suitable scaling factor. For example, W' may be given by $W + \frac{\alpha}{\sqrt{mn}}P_1C'P_2$ , wherein $\alpha$ is a tunable hyperparameter (e.g., a scalar value), and m and n represent the dimensions of the weight matrix W as defined below. This normalization by $\sqrt{mn}$ may ensure that the magnitude of the weight updates remains consistent regardless of the size of the model layers. This may, for example, facilitate the transfer of hyperparameters across different model architectures.

The *sum W + $P_1C'P_2$* is further illustrated schematically in Fig. 2B, which uses the label $W_0$ for the weight matrix 124, W.

An example of an algorithm implementing aspects of the method 300 for the weight matrix 124, W is as follows:

```
1: m, n = shape(W)
2: P₁, P₂ = TFF(k, ρₘ, m), TFF(k, ρₙ, n)
3: Coeffs = RandomInit(size = n_c)
4: C = rearrange(Coeffs, m, n, G)
```

$$5: \quad \delta W = \frac{\alpha}{\sqrt{mn}}P_1CP_2$$

```
6: W' = W + δW
```

using a number k of fusion frame subspaces, a number $n_c$ of non-zero coefficients of the fine-tuning matrix C, locations G of non-zero coefficients of the fine-tuning matrix C, subspace dimensions $\rho_m$ and $\rho_n$, and a scalar $\alpha$. This algorithm may, for example, be performed for the respective weight matrices of each layer of the machine learning model 122.

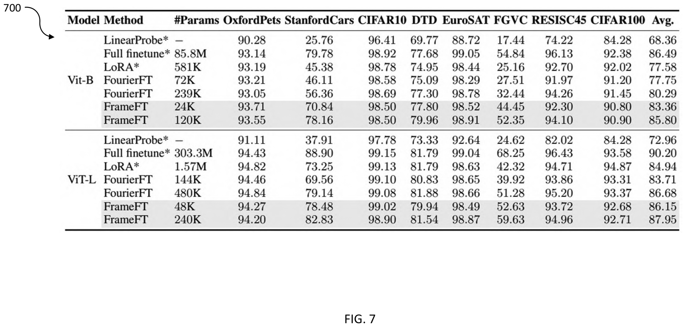

The weight matrix 124, W, may be of a size *m* x *n* (it may be that *m* = *n* for a square weight matrix). The fine-tuning matrix 110, C, may be of any size *p* x *q*. Each of *p* and *q* may be smaller (in many cases, much smaller) than *m* and *n*. The projection matrices 114, 116 ($P_1$, $P_2$) may then have respective sizes *m* x *p* and *q* x *n,* producing a weight update matrix 108, $P_1CP_2$, of size *m* x *n,* which may be added after optimisation to the weight matrix 124, W, to obtain the fine-tuned weight matrix W' as described herein. The dimensions *p* and *q* of the fine-tuning matrix 110, C, may be chosen to have any desired value, with smaller *p* and *q* allowing faster computation. However, choosing *p* and *q* to be too small may compromise the effectiveness of fine-tuning. In this regard, experimental data in Fig. 7 shows the effects of various choices under particular experimental conditions.

The weight matrix 124 and projection matrices 114, 116 are not updated during the training of the fine-tuning matrix 110. That is, the weight matrix 124 and the projection matrices 114, 116 remain frozen. This is illustrated in Fig. 2B by the use of "frozen" symbols for the weight matrix 124 and projection matrices 114, 116 to indicate that these matrices are not updated, and a "fire" symbol for the fine-tuning matrix 110 to indicate that this matrix is updated.

The machine learning model 122 may be a sequence processing e.g. sequence-to-sequence model neural network.

The layer of the machine learning model 122 can have any architecture: the described techniques are not limited to any particular architecture. For example, the layer may be a feedforward layer, a recurrent layer, a convolutional layer, or a neural network layer including an attention mechanism (e.g. a self-attention mechanism).

The machine learning model 122 may be, or may form part of, a transformer neural network, and may comprise or be associated with one or more transformer blocks.

A transformer block typically includes an attention or self-attention neural network layer followed by a feedforward neural network. An attention, or self-attention, neural network layer is a neural network layer that includes an attention, or self-attention, mechanism (that operates over the attention layer input to generate the attention layer output). A self-attention mechanism may be masked so that any given position in an input sequence does not attend over any positions after the given position in the input sequence. There are many different possible (self-) attention mechanisms. Some examples of transformer blocks including attention mechanisms, are described in Vaswani et al. "Attention is all you need", 31st Conference on Neural Information Processing Systems (NIPS 2017), Long Beach, CA, USA.

The task may be a natural language processing task, and obtaining the pre-trained machine learning model 122 may comprise obtaining a machine learning model 122 trained to process task descriptions comprising natural language prompts.

The task may be a visual processing task, and obtaining the pre-trained machine learning model 122 may comprise obtaining a machine learning model 122 trained to process task descriptions comprising visual prompts.

The fine-tuning matrix 110 may be a sparse matrix, e.g. a matrix in which a majority of the elements, e.g. greater than 75% or 90% of the elements are zero.

Each block of the plurality of blocks 112 of the fine-tuning matrix 110 may be a 2 x 2 matrix.

The objective function may be optimised by a gradient-based, e.g. gradient descent method. This can involve backpropagating gradients of the objective function to update learnable parameters the weights as described above. This may use any appropriate gradient descent optimization algorithm, e.g. Adam or another optimization algorithm.

In this regard, it is noted that the linear composition of the weight update matrix 108, $P_1CP_2$ may preserve smoothness properties of the objective function. Whereas parameterising updates as, for example, a product of two trainable matrices may render a loss function non-smooth, methods disclosed herein may facilitate that if the objective function is Lipschitz smooth with respect to the weights of the weight matrix 124, it remains Lipschitz smooth with respect to the fine-tuning matrix 110. This may increase the chance that gradient-based optimization methods will converge to a critical point at a predictable rate, thereby improving training stability and reducing the likelihood of divergence.

The above method may be accomplished in a manner which treats each block of the fine-tuning matrix 110, C, independently. This has several benefits, allowing for smaller optimisation tasks of one block at a time, and allowing the potential for parallelised processing of each block as described below.

Fig. 4 shows a flow chart of a method 400 which is a variant of the method 300, wherein the blocks 112 of the fine-tuning matrix 110 are generated and processed separately, such that the weight update matrix 108 comprises a sum of components, each corresponding to a respective block. The steps of the method 400 correspond to steps of the method 300 described above, with additional features as described below.

Let the fine-tuning matrix 110, C, be composed of blocks 112 $[B_1, B_2, ..., B_c]$ for some c.

Each block $B_i$ may be generated and processed before the next block is generated. Alternatively, all the blocks $B_i$ may be generated together and still processed separately.

At step S408, each block $B_i$ may be used to obtain a component of the weight update matrix 108, $P_1CP_2$, corresponding to that block $B_i$. This component may, for example, have the form $P_1B_iP_2$. The full weight update matrix 108 is then the sum of these components.

At step S412, each embedding may then be processed as described above, using the component $P_1B_iP_2$. For example, an output 118, $h_i$, may be given by $Wx + P_1B_iP_2x$. Each block $B_i$ may contribute a respective output 118, $h_i$, for each embedding 106, *x,* and the outputs 118 associated with each block $B_i$ may thereby define S414 a respective objective function corresponding to that block $B_i$.

This is represented in Fig. 2B, wherein the weight matrix 124 is added to a sum of each respective component of the weight update matrix 108. This is shown in the figure by each of the projection matrices 114, 116 and the fine-tuning matrix 110 being shown as a stack of matrices. In the case of the projection matrices 114, 116, each matrix in the shown stack is the same; the depiction of stacks in this case merely represents that each component of the weight update matrix 108 is derived from the projection matrices 114, 116 as described above.

At step S416, any of the optimisation methods described herein may then be applied to optimise the value of the respective objective function, which is done by updating the values of the block $B_i$ while keeping the projection matrices 114, 116 ($P_1, P_2$) and the weight matrix 124, W, frozen. This results in a trained block $B_i$', and correspondingly a trained component $P_1B_i'P_2$.

At step S418, the trained components $P_1B_i'P_2$ may then be used to update the weight matrix 124, W, for example by adding each trained component $P_1B_i'P_2$ to the weight matrix 124 in turn.

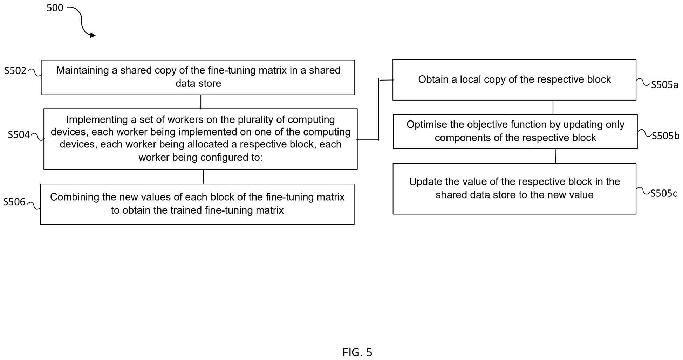

The above-described method may be implemented on a plurality of computing devices. Fig 5 shows a flowchart of an example method 500 of optimising the objective function in such an implementation. The method 500 comprises: maintaining S502 a shared copy of the fine-tuning matrix 110 in a shared data store; implementing S504 a set of workers on the plurality of computing devices, each worker being implemented on one of the computing devices, each worker being allocated a respective block $B_i$, each worker being configured to: obtain S505a a local copy of the respective block $B_i$; optimise S505b the objective function by updating only components of the respective block $B_i$; and update S505c the value of the respective block $B_i$ in the shared data store to the new value; and combining S506 the new values of each block $B_i$ of the fine-tuning matrix 110 to obtain the trained fine-tuning matrix.

Such an implementation allows parallel computing of blocks 112 associated with separate subspaces, such that the overall optimisation task may be performed more quickly by optimising some or all of the blocks 112 at the same time.

For example, the block diagonal structure of the fine-tuning matrix 110, C may allow for computational throughput to be significantly increased. In particular, in embodiments, the non-zero coefficients of C may be confined to distinct blocks $B_i$ that may not interact with one another during the projection step. This may facilitate the computations for each subspace being performed independently. This independence may allow the fine-tuning module 102 to utilize efficient parallel processing (e.g., distinct GPU kernels) for each block $B_i$ without requiring complex synchronization or cross-communication between blocks $B_i$. This may allow higher processing speeds compared to methods requiring, for example, dense matrix multiplications and/or Global Fourier Transforms.

The plurality of computing devices may perform the role of the fine-tuning module 102 described above.

The one or more computing devices may comprise one or more hardware accelerator units that each perform processing tasks associated with a respective block $B_i$.

Obtaining the pre-trained machine learning model 122 may comprise training the pre-trained machine learning model 122.

In some implementations, the pre-trained machine learning model 122 may be trained by, for each of a plurality of model training data items, processing an input sequence of the model training data item using the neural network layers of the sequence processing e.g. sequence-to-sequence model neural network to generate an output sequence for the model training data item and adjusting trainable parameters of the neural network layers using the output sequence for the model training data item. For example, adjusting the trainable parameters of the neural network layers using the output sequence for the model training data item can comprise backpropagating gradients (with respect to the trainable parameters) of a training objective function through the neural network layers and using the gradients to adjust the trainable parameters to optimize the training objective function. Where the sequence processing model neural network is a language model neural network, the training may, for example be as described in Brown et al, "Language models are few-shot learners", in Conference on Neural Information Processing Systems, 2020.

In some implementations, the input sequence and/or the output sequence comprises tokens that each represent words or wordpieces in a natural language. For example, in some implementations, the input sequence comprises tokens that represent words or wordpieces in a first natural language, and the output sequence comprises tokens that represent words or wordpieces in a second, different natural language

Obtaining the pre-trained machine learning model 122 may comprise receiving the weight matrix 124 from another computing device as part of a request for fine-tuning, and the method 300, 400 may further comprise transmitting the fine-tuned weight matrix to the other computing device.

This may, for example, be part of a client-server arrangement. A client with a trained model 122 may wish to fine-tune the model 122 for a particular task. They may send a request to a server that executes one of the methods described herein, and ask the server to perform the fine-tuning. The client may provide the trained model 122 that is to be fine-tuned, and the server may perform the fine-tuning and provide the fine-tuned model back to the client. That is, the server may fill the role of the fine-tuning module 102 described above.

The request for fine-tuning may further comprise the training data 103, or otherwise the server may provide the training data 103. This may, for example, depend on the specificity of the task, and the availability of suitable data to the client and the server.

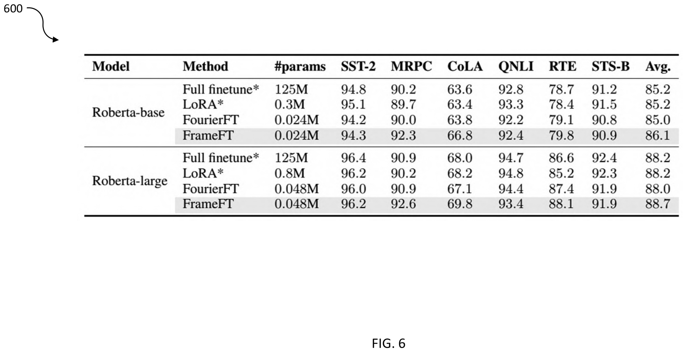

Figs. 6-8 show tables 600, 700, 800 of experimental data demonstrating performance of methods described herein compared to other fine-tuning methods.

Fig. 6 shows a table 600 of the performance of different methods for fine-tuning RoBERTa Base and Large models on the GLUE benchmark. "FrameFT" refers to a particular implementation of methods disclosed herein.

Fig. 7 shows a table 700 of the performance of different methods for fine-tuning ViT Base and Large models on different datasets.

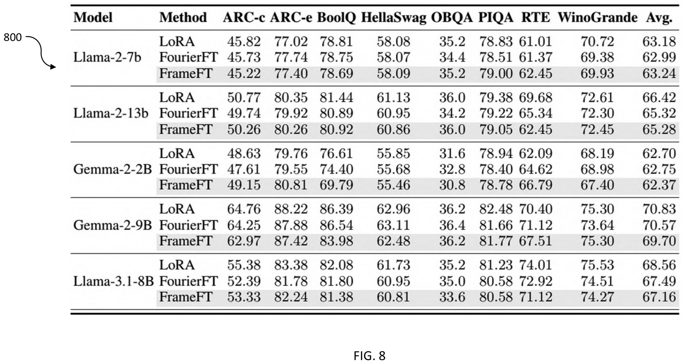

Fig. 8 shows a table 800 of the performance of LLMs fine-tuned on the Alpaca dataset by various methods and then evaluated on the LM-evaluation-harness. The number of parameters used for FrameFT in generating the data in the table 800 was approximately 30 times fewer than the number of parameters used for LoRA.

In all three tables 600, 700, 800 it can be seen that methods disclosed herein perform at least as well as all the baseline methods under comparison using significantly fewer parameters.

The following passages describe embodiments wherein the pre-trained machine learning model 122 is a sequence processing e.g. sequence-to-sequence model neural network, particularly tasks that such a model 122 may be applied to (and for which the model 122 may be fine-tuned). As described above, such a model 122 may process an input sequence comprising input tokens to generate an output sequence comprising output tokens, which may be of the same or a different type as the input tokens, depending on the application. There are many different applications of such models.

Some of the tasks that the fine-tuned machine learning model can perform are described below.

Sequence processing

The described systems and techniques may be applied to a wide range of different types of input sequence and output sequence. In implementations of the described techniques the tokens may represent, characterize, or encode any type of information in a sequence e.g. stream of data. The term "represent" is used, below, generally to refer to any way in which a token can encode part of a sequence. The tokens may include marker tokens, such as a start of sequence token, an end of sequence token, and a separator token (indicating a separation or break between two distinct parts of a sequence). The tokens may, but need not be, drawn from a defined vocabulary of tokens.

In some implementations the input tokens and the output tokens each represent words, wordpieces or characters in a natural language. A wordpiece may be a sub-word (part of a word), and may be an individual letter or character. As used here, "characters" includes Chinese and other similar characters, as well as logograms, syllabograms and the like.

Some of these implementations may be used for natural language tasks such as providing a natural language response to a natural language input, e.g. for question answering, or for text completion. In some implementations the input sequence may represent text in a natural language and the output sequence may represent text in the same natural language, e.g. a longer item of text. For example in some implementations the input sequence may represent text in a natural language and the output sequence may represent the same text with a missing portion of the text added or filled in. For example the output sequence may represent a predicted completion of text represented by the input sequence. Such an application may be used, e.g. to provide an auto-completion function e.g. for natural language-based search. In some implementations the input sequence may represent a text in a natural language e.g. posing a question or defining a topic, and the output sequence may represent a text in a natural language which is a response to the question or about the specified topic.

As another example the input sequence may represent a first item of text and the output sequence may represent a second, shorter item of text e.g. the second item of text may be a summary of a passage that is the first item of text. As another example the input sequence may represent a first item of text and the output sequence may represent an aspect of the first item of text e.g. it may represent an entailment task, a paraphrase task, a textual similarity task, a sentiment analysis task, a sentence completion task, a grammaticality task, and in general any natural language understanding task that operates on a sequence of text in some natural language e.g. to generate an output that classifies or predicts some property of the text. For example some implementations may be used to identify a natural language of the first item of text, or of spoken words where the input is audio (as described below).

Some implementations may be used to perform neural machine translation. Thus in some implementations the input tokens represent words, wordpieces, or characters in a first natural language and the output tokens represent words, wordpieces or characters in a second, different natural language. That is, the input sequence may represent input text in the first language and the output sequence may represent a translation of the input text into the second language.

Some implementations may be used for automatic code generation. For example the input tokens may represent words, wordpieces or characters in a first natural language and the output tokens may represent instructions in a computer programming or markup language, or instructions for controlling an application program to perform a task e.g. build a data item such as an image or web page.

Some implementations may be used for speech recognition. In such applications the input sequence may represent spoken words and the output sequence may represent a conversion of the spoken words to a machine-written representation e.g. text. Then the input tokens may comprise tokens representing an audio data input including the spoken words e.g. characterizing a waveform of the audio in the time domain or in the time-frequency domain. The output tokens may represent words, wordpieces, characters, or graphemes of a machine-written, e.g. text, representation of the spoken input, that is representing a transcription of the spoken input.

Some implementations may be used for handwriting recognition. In such applications the input sequence may represent handwritten words, syllabograms or characters and the output sequence may represent a conversion of the input sequence to a machine-written representation e.g. text. Then the input tokens may comprise tokens representing portions of the handwriting and the output tokens may represent words, wordpieces, characters or graphemes of a machine-written, e.g. text, representation of the spoken input.

Some implementations may be used for text-to-speech conversion. In such applications the input sequence may represent text and the output sequence may represent a conversion of the text to spoken words. Then the input tokens may comprise tokens representing words or wordpieces or graphemes of the text and the output tokens may represent portions of audio data for generating speech corresponding to the text, e.g. tokens characterizing a portion of a waveform of the speech in the time domain or in the time-frequency domain, or phonemes.

In some implementations the input sequence and the output sequence represent different modalities of input. For example the input sequence may represent text in a natural language and the output sequence may represent an image or video corresponding to the text; or vice-versa. In general the tokens may represent image or video features and a sequence of such tokens may represent an image or video. There are many ways to represent an image (or video) using tokens. As one example an image (or video) may be represented as a sequence of regions of interest (RoIs) in the image, optionally including one or more tokens for global image features. For example an image may be encoded using a neural network to extract RoI features; optionally (but not essentially) a token may also include data, e.g. a position encoding, representing a position of the RoI in the image. As another example, the tokens may encode color or intensity values for pixels of an image. As another example, some image processing neural network systems e.g. autoregressive systems, naturally represent images as sequences of image features. As another example, a transformer-based sequence processing e.g. sequence-to-sequence neural network system as previously described may be used to process images instead of or as well as text (e.g. if trained on images instead of or as well as text).

Thus in some implementations at least one of the input sequence and the output sequence is a sequence representing an image or video, and the tokens represent the image or video. For example the input sequence may be a sequence of text, the input tokens may represent words, wordpieces, or characters and the output sequence may comprise output tokens representing an image or video e.g. described by the text, or providing a visual answer to a question posed by the text, or providing a visualization of a topic of the text. In another example the input sequence may comprise a sequence of input tokens representing an image or video, and the output tokens may represent words or wordpieces, or characters representing text e.g. for a description or characterization of the image or video, or providing an answer to a question posed visually by the image or video, or providing information on a topic of the image or video.

In some other implementations both the input sequence and the output sequence may represent an image or video, and both the input tokens and the output tokens may represent a respective image or video. In such implementations the method/system may be configured to perform an image or video transformation. For example the input sequence and the output sequence may represent the same image or video in different styles e.g. one as an image the other as a sketch of the image; or different styles for the same item of clothing.

In some implementations the input sequence represents data to be compressed, e.g. image data, text data, audio data, or any other type of data; and the output sequence a compressed version of the data. The input and output tokens may each comprise any representation of the data to be compressed/compressed data e.g. symbols or embeddings generated/decoded by a respective neural network.

In some implementations the input sequence represents a sequence of actions to be performed by an agent e.g. a mechanical agent in a real-world environment implementing the actions to perform a mechanical task. The output sequence may comprise a modified sequence of actions e.g. one in which an operating parameter, such as a speed of motion or power consumption, has a limited value; or one in which or safety or other boundary is less likely to be crossed. For example the input tokens and the output tokens may represent the actions to be performed.

In another example the input sequence of tokens can comprise tokens that represent an observation of the environment, e.g. an image captured by a camera or other imaging device from a real-world environment. The output sequence of tokens comprises tokens that define one or more actions to be performed by the agent, e.g. a mechanical agent, in the environment, the real-world environment, in response to the observation. The model can be trained to control a simulated version of the agent in in a simulated version of the environment and then afterwards used to control the real agent in the real-world environment.

In some implementations the input sequence represents a sequence of health data and the output sequence may comprise a sequence of predicted treatment. Then the input tokens may represent any aspect of the health of a patient e.g. data from blood and other medical tests on the patient and/or EHR (Electronic Health Record) data; and the output tokens may represent diagnostic information e.g. relating to a disease status of the patient and/or relating to suggested treatments for the patient, and/or relating to a likelihood of an adverse health event for the patient.

Language models

As mentioned above, the sequence processing e.g. sequence-to-sequence model neural network may be a language model neural network. In general, a language model neural network is a neural network that has been trained so that, given a text prompt that includes a sequence of tokens in a natural language, the neural network can generate the next token in the sequence. This process can be repeated to extend the text prompt one token at a time to generate a natural language output, i.e., to generate the natural language output auto-regressively token by token. At each time "time step," the language model neural network processes the current sequence to generate a probability distribution over a vocabulary of tokens. The next token can then be selected using the probability distribution, e.g., by sampling from the distribution using nucleus sampling or another sampling technique or by selecting the highest-probability token. The tokens in the vocabulary can include any of a variety of tokens, e.g., some combination of words, sub-words, characters, punctuation and other symbols, and numbers. In general, the language model neural network is trained on a corpus of text made up of tokens from the vocabulary (and optionally other tokens that can be mapped to a designated out-of-vocabulary token), to predict the next token in a sequence of tokens from the training data.

It is surprising, but well-established, that large language model neural networks can perform tasks that they were not explicitly trained to perform. For example they can perform translation tasks (provided that the training corpus included words in different languages), arithmetic, and many other tasks.

A language model neural network can be made to perform a particular task by providing a natural language description of the desired response as an input or "prompt" (input sequence). In some cases, the prompt may be a few-shot prompt where a few, e.g., 1 to 10, examples of a query and an example output are provided in the text prior to the actual query.

Instead or in addition, a language model neural network may be "fine-tuned" to perform a particular task, by obtaining a pre-trained language model neural network trained on a large corpus of examples as previously described and then further training part of all of the language model neural network on a relatively small number of examples particular to the type of task that is to be performed.

The language model neural network may be a large language model neural network, e.g., one that has greater than 1 billion, 10 billion or 100 billion trained parameters. The language model neural network may have been trained on greater than 10 billion, 100 billion or 1000 billion words or tokens representing words or other text tokens, e.g., sub-words (also known as "word pieces").

In some implementations, the language model neural network is an autoregressive transformer neural network, where a transformer neural network is characterized by having a succession of self-attention neural network layers. A self-attention neural network layer has an attention layer input for each element of the input and is configured to apply an attention mechanism over the attention layer input to generate an attention layer output for each element of the input; there are many different attention mechanisms that may be used. In some implementations the language model neural network can be a mixture-of-experts model.

Generally, an attention mechanism maps a query and a set of key-value pairs to an output, where the query, keys, and values are all vectors. The output is computed as a weighted sum of the values, where the weight assigned to each value is computed by a compatibility function e.g. a dot product or scaled dot product, of the query with the corresponding key. For example an output of the attention mechanism may be determined as $softmax\left(\frac{QK^T}{\sqrt{d}}\right)\mathbf{V}$ where d is a dimension of the key (and value) vector, where query vector $Q = XW^Q$, key vector $K = XW^K$, and value vector $V = XW^V$, with input sequence $X$ and learned query matrix $W^Q$, learned key matrix $W^K$, and learned value matrix $W^V$. The output may be processed by one or more fully-connected, feed forward neural network layers. A layer norm operation may also be incorporated. The attention mechanism may implement multi-head attention, that is it may apply multiple different attention mechanisms in parallel. The outputs of these may then be combined, e.g. concatenated, with a learned linear transformation applied to reduce to the original dimensionality if necessary.

As a particular example the sequence processing e.g. sequence-to-sequence model neural network can comprise a multimodal model in which one or both of the model input (i.e. input sequence) and the model output (i.e. output sequence) comprise an image or audio. For example the multimodal machine learning model may be configured to process an input sequence comprising visual tokens representing pixels of a still or moving image (which here may include a point cloud image), and/or data representing an audio waveform e.g. values or features of the audio waveform such as audio tokens, and/or text tokens representing a sequence of text, to generate an output sequence e.g. comprising text tokens representing the still or moving image or audio waveform, and/or comprising a sequence of intensity value inputs for the pixels of an image or a sequence of values defining an audio waveform. A visual token may, e.g., represent multiple pixels in a region of the image, e.g. as features of the region. Such a multimodal model may perform any of the previously described tasks, e.g. using a multimodal input, or by providing a multimodal output, or by converting between different input and output modes (e.g. text/image/audio). For example it may generate text representing, describing (e.g. captioning), or otherwise characterizing an image or audio input, e.g. by answering a question related to the image or audio input, e.g. relating to a future e.g. physical prediction of a state of objects represented by the image or audio. As another example it may generate an image or audio represented, described, or otherwise characterized by a text input, or otherwise in response to the text input, e.g. representing an image or audio answer to a text question.

In some implementations the neural network layers of the blocks are stored on a user computing device (i.e., local to the user), such as a mobile device, e.g., a mobile phone, tablet or a smart speaker, and the adapter subnetworks are stored on one or more server devices (i.e., remote from the user). Thus, parameters of the adapter subnetworks may not be accessible to users and can therefore remain private.

In other implementations the adapter subnetworks are stored on the user computing device and the neural network layers of the blocks are stored on one or more server devices. Thus, parameters of the adapter subnetworks may not be accessible only to one or more selected users. Thus, the adapter subnetworks may be used to "personalize" the sequence processing e.g. sequence-to-sequence model neural network for a particular one or more users.

A user computing device may be provided an input mechanism that enables user input from the user in a natural language and an output mechanism that provides a system output to the user in the natural language. The input and output mechanism may comprise, e.g., a keyboard and display. Also or instead the input and output mechanism may comprise a speech-based mechanism. For example the input mechanism may comprise a system configured to input audio data characterizing a speech waveform of speech representing the input from the user in the natural language and configured to convert the audio data into tokens representing the speech in the natural language, e.g. representing a transcription of the spoken input. The output mechanism may comprise a system configured to receive tokens representing the output to the user in the natural language and a system configured to convert the received tokens into audio data representing a waveform of speech representing the output to the user in the natural language, i.e. representing spoken words.

In some implementations the input sequence comprises one or more natural language statements relating to an environment, in particular a real-world environment, and includes a natural language request relating to the environment. Similarly the output sequence may be a natural language reply or natural language output statement that also relates to the environment i.e. it provides information relating to the environment, in some implementations relating to or specifying actions to be taken in the environment.

In some implementations the environment is a real-world environment and the method (or a corresponding system) is used for diagnosing a fault in a mechanical system operating in the real world environment. Then obtaining the input sequence may comprise obtaining from one or more sensors, e.g. as described below, one or more observations of the mechanical system (which here includes observations of the operation of mechanical system). These are processed, e.g. as described below, to generate a natural language representation of the one or more observations that is used to provide one or more of the natural language statements of the input sequence. In these implementations the natural language request relates to the operation of the mechanical system and the natural language reply or the natural language output statement is used to identify a fault in the mechanical system. For example the request may comprise a general question such as "Is the system working correctly?" or "What is wrong with the system?" or a specific request such as "Is there a fault with component X?". The ability to hold a dialogue with an agent comprising a sequence processing e.g. sequence-to-sequence model neural network facilitates homing in on a particular fault diagnosis. The diagnosis can use information stored within the trained language generation neural network and can use the ability to search an external data store to supplement the stored information with more comprehensive or more recent information as needed.

As another example, the environment can be a computer security monitoring environment, e.g., the system can be deployed as part of a system that monitors the security of one or more computers. For example, the environment may be a computer network security monitoring environment, and the system can be deployed as part of a system that monitors the security of one or more computers on a computer network, e.g. a wireless network, a cellular network, a local area network and/or the internet. As another example, the environment may alternatively or additionally be a computer system security monitoring environment and the system can be deployed as part of a system that monitors the system for the presence of computer viruses and/or an unresolved software vulnerability, e.g. a zero-day exploit. A software vulnerability may be resolved by updating the software (e.g. patching) and/or removing (e.g. uninstalling) the software from the computer system. In these examples, the natural language request can query whether a computer security incident has been resolved (e.g., "has the incident been resolved?") and the input sequence may comprise relevant statements from system logs, i.e., that are potentially relevant to the event being queried. A computer security incident can be, e.g., a data breach, an unauthorized log-in or other access of a secured system, a detection of a computer virus or detection of a software vulnerability. The incident can be "resolved" when the underlying incident is no longer a threat to the security of the computer system e.g., the computer virus has been removed, the access to the secured system has been removed, the data breach has been mitigated, or the software having the vulnerability has been updated or removed. The system can use the input sequence to generate a reply to the request that comprises a natural language statement indicating whether the incident has been resolved, optionally displaying evidence used to determine this.

The input sequence may include one or more of: code snippets from the software code, system logs, program logs, or other artifacts that should be left on the computer by running the program, or verification rules that represent requirements for the execution of the software program, or natural language statements describing the computer system on which the software executes. In general the input sequence may include relevant statements, i.e., statements that are potentially relevant to the event being queried.

In some implementations obtaining the input sequence may comprise obtaining, from the system logs, the data characterizing the computer network, or both, or from other data as described above, one or more observations of the computer network (which here includes computers on the network), and processing the one or more observations to generate a natural language representation of the one or more observations. The natural language request may relate to the computer security incident or to the secure operation of the computer network. The method may include using the natural language representation of the one or more observations to provide one or more of the natural language statements describing the computer network, and using the natural language reply or the natural language output statement to identify a security status of the computer network or a security flaw in the computer network.

As another example, the environment can be a software testing or evaluation environment, e.g., the system can be deployed as part of a system that tests software before deployment or that evaluates already-deployed software to identify bugs. In these examples, when the system tests software before deployment, the natural language request can ask whether the software will execute as intended, and the input sequence can include code snippets from the software code and, optionally, natural language statements describing the computer system on which the software will execute. The system can then use the input sequence to generate a reply that indicates whether the code will execute as intended, optionally displaying evidence used to determine this. When the system monitors the execution of code after deployment, the natural language request can ask whether a software program, or a portion of a software program, has executed as intended, and the input sequence can include one or more of: code snippets from the software code, system logs, program logs, or other artifacts that should be left on the computer by running the program, or verification rules that represent requirements for the execution of the software program, or natural language statements describing the computer system on which the software executes. The system can then use the input sequence to generate a reply that indicates whether the code has executed as intended, optionally displaying evidence used to determine this. As a particular example, the software program can be part of the boot up of a computer, and the system can generate a reply each time that the computer starts up to verify whether the computer will function correctly after start up.

As another example, the environment can be an educational environment, e.g., the system can be deployed as part of an education software program that assists a user in learning or practicing one or more corresponding skills. In these examples, the input sequence can include natural language statements describing or referencing a scenario or scene in a real-world or imagined environment, and the request can be a question about the scenario or scene.

As another example, the environment can be an information retrieval environment, e.g., the system can be deployed as part of a search engine or other software that allows a user to search for information in a corpus of documents, e.g., the Internet or another electronic document corpus. In these examples, the request can be any appropriate natural language question, and the reply can optionally include evidence such as include relevant statements from the corpus of documents, e.g. as identified by searching the corpus using conventional information retrieval techniques.

In some implementations, the language model neural network is a visual language model (VLM). In general, the VLM may process input sequences comprising tokens that each represent natural language or (a part of) an image or video to generate output tokens that each represent natural language or (a part of) an image or video. For example, the VLM may be configured to describe an image or video using natural language, e.g., to perform an image or video captioning task. As another example, the VLM may be configured to process input tokens representing an image and text tokens representing a query about the image or a request to modifying the image, and to generate output tokens representing an answer to the query or representing a version of the image that has been modified in accordance with the request. The VLM may generate output tokens representing an image or video that is generated in response to input tokens providing a visual and/or audio and/or textual description of a desired image or video.

In some implementations, the "language" of the language model is not a natural language as such (e.g. English), but may instead be a text-based encoding describing an entity or class of entities, e.g. a chemical or biological entity, such as a chemical structure or molecule. For example, the text-based encoding may be an sequence of tokens that defines a molecule or protein, e.g. a sequence specifying an arrangement of atoms or chemical functional groups in a molecule, or the amino acid residues of a protein. The language model may be referred to as a chemical and/or biological language model in such cases. The input for the language generation neural network may therefore be an input string defining a chemical (e.g. protein) structure and the output may be an output string defining a different chemical structure from the input string. The strings may be in the Simplified Molecular Input Line Entry System, SMILES, format, for example.

In some implementations, the language model neural network may be used to interact with a human user of a digital assistant such as a smart speaker, smart display, or other device. For example, information defining a task can be obtained from the digital assistant, and the digital assistant can be used to instruct the user to perform the task. For example, this may comprise receiving, at the digital assistant, a request from the user for assistance and determining, in response to the request, a series of tasks for the user to perform, e.g. steps or sub-tasks of an overall task. Then for one or more tasks of the series of tasks, e.g. for each task, e.g. until a final task of the series the digital assistant can be used to output to the user an indication of the task, e.g. step or sub-task, to be performed. This may be done using natural language, e.g. on a display and/or using a speech synthesis subsystem of the digital assistant. Visual, e.g. video, and/or audio observations of the user performing the task may be captured, e.g. using the digital assistant. A system may then be used to determine whether the user has successfully achieved the task e.g. step or sub-task, i.e. from the answer as previously described. If there are further tasks to be completed the digital assistant may then, in response, progress to the next task (if any) of the series of tasks, e.g. by outputting an indication of the next task to be performed. In this way the user may be led step-by-step through a series of tasks to perform an overall task.

As an illustrative example, a user may be interacting with a digital assistant and ask for help performing an overall task consisting of multiple steps, e.g. cooking a pasta dish. While the user performs the task, the digital assistant receives audio and/or video inputs representative of the user's progress on the task, e.g. images or video or sound clips of the user cooking. The digital assistant uses a system as described above, in particular by providing it with the captured audio and/or video and a question that asks whether the user has completed a particular step, e.g. 'Has the user finished chopping the peppers?', to determine whether the user has successfully completed the step. If the answer confirms that the user has successfully completed the step then the digital assistant progresses to telling the user to perform the next step or, if at the end of the task, or if the overall task is a single-step task, then the digital assistant may indicate this to the user. The digital assistant may then stop receiving or processing audio and/or video inputs to ensure privacy and/or reduce power use.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog, e.g. a conversation agent such as LaMDA. The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g. of a series of tasks, e.g. until a final task of the series. More particularly, the assistance control subsystem can output to the user an indication of the task to be performed, capture, using the observation capture subsystem, visual or audio observations of the user performing the task, determine from the above-described answer whether the user has successfully achieved the task. In response, the digital assistant can progress to a next task of the series of tasks and/or control the digital assistant, e.g. to stop capturing observations.

Multimodal models

The sequence processing e.g. sequence-to-sequence model neural network can be a multimodal machine learning model, such as a VLM, as mentioned above. For example, the input sequence may comprise tokens of one or more modalities and the output sequence may comprise tokens of one or more modalities, which may be the same as of different from the one or more modalities of the tokens of the input sequence. In general, a multimodal machine learning model has a multimodal input configured to receive a first multimodal input of a first modality and a second multimodal input of a second, different modality. As used herein a "modality" refers to a type of data, and thus a multimodal machine learning model is one that can process multiple different types of data. The first multimodal input may comprise, e.g. a text input to receive a sequence of text or audio data representing values of an audio waveform, e.g. instantaneous amplitude data or time-frequency domain data; or non-image sensor data representing an environment with which an agent controlled by the multimodal machine learning model interacts. The second multimodal input may receive an image or video. The multimodal machine learning model may be configured to jointly process encoded versions of the first and second multimodal inputs.

The system and method described herein can therefore be used to perform a multimodal task. For example, some tasks that can be performed include multimodal tasks that involve processing an input sequence comprising a combination of an image and natural or computer language to generate an output sequence that performs the image processing task. The output sequence can be generated from the blocks obtained by partitioning the model neural network layer of a sequence processing e.g. sequence-to-sequence model neural network and the associated adapter subnetworks, which process both the image representation and token embeddings representing text or spoken words in a natural or computer language. The image processing task to be performed may be specified by the words in the natural or computer language.

An example involves generating an output that requires reasoning, e.g. spatio-temporal reasoning, to respond to a natural language query input, e.g. relating to a moving image (video). For example such a query may require predictive reasoning ("what will happen next"), counterfactual reasoning ("what would happen in a different circumstance"), explanatory reasoning ("why did something happen"), or causal reasoning generally. For example the image representation can be used to detect objects in the video frames and provide information relating to the detected objects in response to a query. The query may comprise, for example, a request for a prediction of a future event or state relating to one or more of the objects (e.g. "will objects X and Y collide?"), or a request for conditional or counterfactual information relating to one or more of the objects (e.g. "what event would [not] happen if object X is modified, moved or absent?"), or a request for analysis of the video frames to determine a property or characteristic of one or more of the objects (e.g. "how many objects of type Z are moving?"). The output may, for example, be in the form of a yes/no answer, or may define a probability distribution over a set of possible answers; or the response may define the location of an object. Such systems can be used to predict whether or not two objects will collide, or how this may be avoided. The output may be used e.g. to provide a warning and/or to control motion of one or more of the objects. Such a computer implemented method can be performed by a multimodal machine learning model such as a visual language model (VLM).

A computer-implemented method of performing an image processing task can involve obtaining an image and a string of words, i.e. text, in a natural or computer language, and processing pixels of the image using an (a trained) image encoder neural network, to generate a representation of the image. The text can be processed using a (trained) text encoder to generate a sequence of token embeddings representing the text. The representation of the image and the sequence of token embeddings can be processed using a visual language model to perform an image processing task defined by the text.

The text may be received, e.g., as a series of encoded characters, e.g. UTF-8 encoded characters; such "characters" can include Chinese and other similar characters, as well as logograms, syllabograms and the like. The multimodal machine learning model can include a text encoder that processes a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language.

The model output may comprise any form of output appropriate to the machine learning task performed by the multimodal machine learning model. For example the model output may comprises text in a natural or computer language that defines a result of the task, e.g. for tasks such as image captioning, visual question answering, or object detection or instance segmentation. Also or instead the model output may comprise data defining an image, video or audio object, e.g.

in a generative task; or the model output may comprise non-textual action selection data for selecting an action to be performed by an agent controlled by the model. As another example the model output may also or instead define an intermediate step to be performed during the task, e.g. a call to a software API for a software tool that is used when performing the task; the multimodal input may then receive an output from the software tool that is used to generate a final model output that performs the task. A few particular examples of model output are given later.

Such a multimodal model can be trained using very large (but possibly noisy) datasets in which text is paired with an image and/or with one or more other types of data, e.g. audio data, or data relating to the operation of an agent acting in an environment to perform a variety of tasks. Such a model is can be trained, e.g., using self-supervised learning. The pairing can often be imperfect, and the training dataset can, but may not, include any actual examples of a particular task to be performed, but nonetheless an ability to perform a particular task can emerge. There are many examples of suitable, publically available training datasets.

In general, performing an image processing task using a multimodal neural network such as a VLM, that includes an (a trained) image encoder neural network, can involve providing an image to the image encoder neural network to generate a representation of the image, in particular of features of the image. The representation of the image is then processed to perform the image processing task. In general techniques for processing image representations to perform a wide range of image processing tasks are well known. In general a video processing task can be performed by processing the representations of multiple images representing a sequence video frames.

Some example multimodal machine learning models with which the techniques described herein may be used include: Flamingo (Alayrac et al. arXiv:2204.14198); ALIGN (Jia et al., arXiv:2102.05918); PaLI (Chen et al. ar-Xiv:2209.06794) and PaLI-X (Chen et al. arXiv:2305.18565); and Gemini ("Gemini: A Family of Highly Capable Multimodal Models, Gemini Team, Google"). These references also include indications of training datasets that may be used to train the respective models.

As used herein an image may be any still or moving image, i.e. the image may be part of a video, in 2D or 3D, and may be a monochrome, color or hyperspectral image, i.e. comprising monochrome or color pixels. As defined herein an "image" includes a point cloud e.g. from a LIDAR system, and a "pixel" includes a point of the point cloud. The image, during or after (pre-)training and/or fine tuning may, e.g. have been captured by a camera or other image sensor from the real world, and objects in the image or video may comprise physical objects, represented by the image or video.

A few examples of some machine learning tasks that can be performed by a model trained as described herein follow. The tasks described below may be tasks that require spatial awareness or other context from the image or video. For example, a prompt may ask "What is the object in the top left corner?".

As one example the task may comprise an object or action detection task. A task-specific training data item may comprise an image or video containing one or more objects or actions, and a sequence of text. The sequence of text may describe or otherwise label the object(s) or action(s) and may include text giving bounding box coordinates for the object(s) or action(s). After training, when the model is used in inference, the model output (output sequence) may comprise or represent text that describes or otherwise labels detected object(s) or action(s) in the image input, and may include bounding-box coordinates for the detected object(s) or action(s), e.g. "10 20 90 100 cat 20 30 100 100 dog".

As another example the task may comprise a classification task, e.g. an object or action classification task. A task-specific training data item may comprise an image or video item containing one or more objects or actions and a sequence of text. The sequence of text may describe or otherwise classify the object(s) or action(s). After training, when the model is used in inference, the model output (output sequence) may comprise data, e.g. text, that classifies the object(s) or action(s) in the image input into one of a plurality of classes.

As another example the task may comprise an image or video describing task, e.g. a captioning task (which, as used here, includes an audio description task to explain what is happening in a video). A task-specific training data item may comprise an image or video and a sequence of text describing the image or video. After training, when the model is used in inference, the model output may comprise data, e.g. text, describing the image or video. For example the model output may provide a caption or description or it may count objects in the image or video, or it may provide some other form of description.

As another example the task may comprise an image or video question-answering task. A task-specific training data item may comprise an image or video and a sequence of text that describes the image or video. After training, when the model is used in inference, the model output may comprise data, e.g. text, that answers a question about the second modality input specified in a prompt sequence of text, e.g. as described above. This data may be used, e.g., to answer questions about visual plots and charts or about sounds.

As another example the task may comprise a character or word recognition task, e.g. an OCR (optical character recognition) task. A task-specific training data item may comprise an image or video and a sequence of text that includes text that is depicted in the image or video, or that is represented as speech in the audio item. After training, when the model is used in inference, the model output may comprise text that represents characters or words in the second modality input, e.g. in a natural language.

As another example the task may comprise a still or moving image generation task; Google DeepMind Gemini is an example of a system that can generate an image output. As another example an image such as a plot or chart may be decoded from one or more (language) tokens generated by the system. A training data item for such a system may comprise an image or video and a sequence of text that describes the image or video. After training, when the model is used in inference, the model output may comprise data for an image or video, e.g. image data defining values for pixels of a still or moving image, and the sequence of text in the multimodal input to the model may describe or characterize the image or video to be generated.

As another example the task may comprise a computer language text generation task. A task-specific training data item may comprise an image or video and a sequence of text in a computer language for generating the image or video. After training, when the model is used in inference, the model output may comprise text in the or another computer language for generating or rendering an image or video, e.g. a web page, plot, or chart.

In another example of a computer language text generation task, a task-specific training data item may comprise an image or video and a sequence of text in a computer language for performing a task in relation to the image or video, e.g. a data processing task that involves analyzing the content of the image or video to provide a result of the analysis or, e.g., a search to search for information relating to the content of the image or video. The computer language in the model output may comprise computer language for invoking a function or calling one or more external APIs. Merely as one example, such an output may be formatted as a JSON object. As previously, the sequence of text in the multimodal input may define the task to be performed and the second modality input may comprise, e.g. an image or video in relation to which the task is to be performed, e.g. a task that involves manipulation of particular types of data that may benefit from access to an API such as mathematical data, date/time related data, scientific data, recent data that may post-date training of the model (that may be accessed by a search function or API), and so forth. After training, when the model is used in inference, the model output may comprise text in the or another computer language for performing a task, e.g. as described above, in relation to an image or video in the second modality input. The method may then include using the text in the computer language to perform the task.

In general, where the model output comprises text this may be provided as speech representing the text.

In some implementations, the machine learning task comprises an agent control task in which the agent interacts with an environment to perform the agent control task. In these implementations the multimodal input includes an observation characterizing the environment. For example the multimodal input can include a sequence of text that defines the task to be performed by the agent and the image can represent an observation of the environment, e.g. captured by a camera or other imaging device from a real-world environment. A task-specific training data item may comprise a sequence of text representing one or more actions of the agent, and an image observation of the environment. After training, when the model is used in inference, the model output comprises an action selection output, e.g. including text, that is used to select one or more actions to be performed by the agent in the environment in response to the observation. As an illustration the model output (output sequence) may define an action as text such as "A: 132 114 128 5 25 156", that can be converted into a control signal for a mechanical agent, such as a robot, e.g. "$\Delta T = [0.1, -0.2,0]\ \Delta R = [10°, 25°, -7°]$". As another example the action selection output may also or instead define one or more low-level skills, e.g. from a vocabulary of previously learnt skills. As before, the sequence of text in the multimodal input to the model may describe the task to be performed, e.g. "What action should the robot take to [perform task]".

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations may include, e.g., one or more of: images, object position data, and sensor data to capture observations as the agent interacts with the environment. The actions may define control signals to control the robot or other mechanical agent, e.g., positions, torques, or other control signals for the parts of the mechanical agent, or higher-level control commands.

In some agent control implementations, the agent may be a human agent and the environment may be a real-world environment. For example the agent can be a human user of a digital assistant such as a smart speaker, smart display, or some other device that is used to instruct the user to perform actions. The task may be any real-world task that the user wishes to perform. The observations may be obtained from an observation capture subsystem, e.g. a monitoring system such as a video camera or sound capture system, to capture visual observations of the user performing the task. The actions may comprise instructions in the form of, e.g., text, image, video, or audio data such as speech, that guide the user in performing the task.

In some implementations, the multimodal input can include an observation characterizing an environment of an agent performing a task, e.g. a mechanical agent or software agent. The observation may characterize the environment at a particular time step and the model output may define one or more actions to be performed by the agent at the time step. For example each action may be expressed as a sequence of text, e.g. as one or more characters such as letters and numbers, that represents the action, or as text that defines a low-level "skill" from a set of skills; or the model output may, e.g., define parameters of a probability distribution from which an action is selected. Optionally the text received by a text input may include text describing the task to be performed. Optionally the text input may include a description of one or more actions performed at a preceding time step. Where the agent is a software agent the model output may comprise a text output for calling a software API at a time step, and the model input at a subsequent time step, e.g. the text input, may comprise a response from the software agent, e.g. from the API.

Some examples of multimodal machine learning models controlling an agent, and with which the techniques described herein may be used, are described in: PaLM-E (Driess et al. arXiv:2303.03378); RT-1 (Brohan et al. arXiv:2212.06817); and RT-2 (Brohan et al. arXiv:2307.15818).

Such a multimodal machine learning model can have an audio input, or an agent action input to receive agent action data representing an action of an agent performing a task in an environment. Data received in this way may be jointly processed with data from a text input and from an image input to generate the model output.

Such a multimodal machine learning model has a multimodal input and can, in implementations, perform a range of different tasks. However in implementations not every task that the model performs requires a multimodal input, e.g. a task to generate an image from a text description of the image, or an image captioning task. In some implementations, after training, the text input can be used to specify a particular task that is to be performed by the multimodal machine learning model, e.g. by providing a "prompt" to the model describing the task to be performed or giving an example of the task as a prompt to the model. Such prompts may optionally be included in the training data.

The multimodal machine learning model is configured to process the multimodal input (input sequence) in accordance with the trainable parameters of the multimodal machine learning model, to generate a model output (output sequence) that defines a result of one or more machine learning tasks. A training system can include a training engine to train the multimodal machine learning model, i.e. to update values of the trainable parameters, to perform the machine learning task(s), using training data items stored in one or more training datasets.

In general each training data item comprises multimodal data for use in training the multimodal machine learning model, e.g. using a self-supervised training objective. As another example such a multimodal machine learning model can also or instead be trained using a reinforcement learning objective, e.g. when the model is used to control an agent to perform a task.

There are many different types of self-supervised objective function that may be used. As one example the model may be trained using a softmax cross entropy loss, e.g. using language model style teacher forcing with a softmax cross entropy loss. As another example the model may be trained with an autoregressive negative log likelihood (NLL) loss, such as $-\sum_{l=1}^{L} \log p(y_l | y_{<l}, x_{\leq l})$ for a multimodal input comprising a sequence of text encoded as L tokens with the $l$th text token $y_l$ conditioned on preceding second modality inputs $x_{\leq l}$, such as one or more images or videos, and conditioned on preceding text tokens $y_{<l}$. As another example the model may be trained with a masking loss, e.g. a loss that requires the model to predict masked-out data such as masked out text tokens. As another example the multimodal machine learning model can be trained using a self-supervised objective function that comprises a contrastive loss function (one that is dependent upon a positive example and one or more negative examples).

There are, similarly, many different types of reinforcement learning objective function that may be used.

Each training data item may comprise, e.g., an example sequence of text and an example of the second modality input, e.g. an example image or video; in general these are semantically related to one another (but not always, as the training dataset may be noisy). As an example, matched, text and image or video data and may be obtained from web pages, e.g. from images or videos and their corresponding alt-text (text from the HTML or XHTML alt attribute); or from web pages where images or video and text are interleaved with one another. One example of such a dataset is WebLI (Web Language Image, Chen et al. arXiv:2305.18565v1). Training datasets for other types of second modality input can similarly be obtained from web pages. Such training datasets can be large, e.g. > $10^7$, $10^8$ or $10^9$ items.

Also or instead, smaller but more specialized training datasets can be used, e.g. to fine tune a model for a particular task or tasks. A few examples for visual tasks are the Visual Genome dataset for Visual Question Answering (Krishna et al., arXiv:1602.07332); Objects365 (Shao et al., "Objects365: A large-scale, high-quality dataset for object detection", IEEE/CVF international conference on computer vision, pages 8430-8439); Open Images V4 (Kuznetsova et al., arXiv:1811.00982); the SBU dataset (Ordonez et al. "Im2Text: Describing Images Using 1 Million Captioned Photographs", NeurIPS 2011); the Conceptual Captions datasets, e.g. V1 (2M images) or V2 (10M images) (Sharma et al., "Conceptual Captions: A Cleaned, Hypernymed, Image Alt-text Dataset For Automatic Image Captioning", ACL 2018); and Kinetics for video (Kay et al., arXiv:1705.06950). An example task-specific training dataset for audio data is AudioSet (Gemmeke et al., "Audio set: An ontology and human-labeled dataset for audio events," ICASSP, IEEE, 2017, pp. 776-780). An example task-specific training dataset for agent (robot) control is described in Ebert et al., ar-Xiv:2109.13396.

Control tasks

In some further applications the method, or a corresponding system, is used for natural language control of a task in a real-world environment. That is, the natural language request may relate to the task, e.g. it may comprise a request to perform the task, and the reply, i.e. the information provided by the method/system in the reply, may be used to control e.g. a mechanical system (which may be referred to as a mechanical agent), or a computer system for performing the task.

As one example, the natural language request may comprise a high level request, e.g. from a human, to perform a task, e.g., "How would you put the empty bottle in the bin?", "Bring me a glass of water", or "Can you put the vacuum cleaner in the cupboard?". The or each natural language reply may define one or more steps of the task, which may then be interpreted by the mechanical system, more specifically a control system of the mechanical system, to perform the step of the task. For example such a control system may convert the natural language reply into a series of primitive actions to be performed by the mechanical system to perform the step of the task.

Thus in some implementations the method, or a corresponding system, is used for controlling a mechanical system, or mechanical agent, acting in a real world environment to perform a task. The mechanical system may be, e.g. a robot or an autonomous or semi-autonomous vehicle. Determining the input sequence may comprise obtaining, from one or more sensors, one or more observations of the real world environment, and processing the one or more observations to generate a natural language representation of the one or more observations. Merely as one example, an image captioning model (which here includes a video captioning model) can be used to process an image in this way; other models can be trained to perform a corresponding task for other types of sensor/sensed data than images. The natural language representation of the one or more observations can be used to provide one or more natural language statements for the input sequence. The natural language request may relates to an action to be performed by the mechanical system. The natural language reply (or the natural language output statement) may be used to control the mechanical system in the real world environment. For example the reply may define an action to control movement or navigation of the robot or vehicle in the real-world environment. Such an action may be a high level action or "skill" that may be translated into one or more lower level or "primitive" actions, e.g. by a trained neural network.

In some implementations the mechanical system has a control system to control actions of the mechanical system. Receiving the natural language request may comprise receiving a control signal from the control system and generating the natural language request from the control signal. For example there may be a dialogue between the agent comprising the sequence processing e.g. sequence-to-sequence model neural network and the mechanical system and/or a human (e.g. if a control system of the mechanical system has a human user interface). Rules or preferences (preference scores) may impose constraints on actions to be taken e.g. for safety or other reasons.

The mechanical system, hereafter also termed the mechanical agent, may include one or more sensors that capture observations of the environment, e.g., at specified time intervals, as the mechanical agent navigates through the environment or attempts to perform a task in the environment. For example, the observations may include, e.g., one or more of: images, object position data, and sensor data to capture observations as the mechanical agent interacts with the environment, for example sensor data from an image, distance, or position sensor or from an actuator. For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the position, linear or angular velocity, force, torque or acceleration, and global or relative pose of one or more parts of the mechanical agent. The observations may be defined in 1, 2 or 3 dimensions, and may be absolute and/or relative observations. The observations may also include, for example, sensed electronic signals such as motor current or a temperature signal; and/or image or video data for example from a camera or a LIDAR sensor, e.g., data from sensors of the mechanical agent or data from sensors that are located separately from the mechanical agent in the environment.

The mechanical agent may be associated with a control system that generates control signals for controlling the mechanical agent using the observations generated by the sensors. In particular, the control system may generate control signals that cause the mechanical agent to follow a planned trajectory through the environment by first determining an appropriate action for the mechanical agent to perform, e.g., as part of performing a specified task, e.g., navigating to a particular location, identifying a particular object, moving a particular object to a given location, manipulating a particular object in some way, and so on, and then generating control signals that cause the mechanical agent to perform the action.

Such a control system can be deployed on-board the mechanical agent or can be deployed remotely from the mechanical agent and can transmit the control signals to the mechanical agent over a data communication network. The control signals can be control inputs to control the mechanical agent. For example, when the mechanical agent is a robot the control signals can be, e.g., torques for the joints of the robot or higher-level control commands. As another example, when the mechanical agent is an autonomous or semi-autonomous land, air, sea vehicle, the control signals can include actions to control navigation, e.g., steering, and movement of the vehicle, e.g., braking and/or acceleration of the vehicle. For example, the control signals can be, e.g., torques to the control surface or other control elements, e.g., steering control elements of the vehicle, or higher-level control commands. In other words, the control signals can include, for example, position, velocity, or force/torque/acceleration data for one or more joints of a robot or of parts of another mechanical agent (system).

In these examples, like the control system, software to implement a method as described herein ("system software") can be deployed on-board the mechanical agent or can be deployed remotely from the mechanical agent.

In these implementations, the system software may be used to provide an additional layer of control on top of the control system and the system software or another component can determine the request based on information received by the control system. For example, the request may be determined by receiving a control signal from the mechanical agent control system, and then determining one or more natural language requests, e.g., relating to the mechanical agent in the environment, from the control signal. The reply may be used to control the mechanical system.

In some implementations, the mechanical agent control system is an autonomous or semi-autonomous control system, e.g., that autonomously or semi-autonomously controls navigation or other actions of the mechanical agent, e.g. vehicle. Also or instead the mechanical agent control system may have an interface to receive control commands, e.g., from a human operator.

In these applications the described system software may be used to provide an additional layer of control, e.g., for safety purposes. For example the described system software may be used to inhibit control of the mechanical agent in a way that could be dangerous or contrary to one or more rules or preferences (as defined by preference scores). Rules relating to control of the mechanical agent may be entered explicitly, e.g., as natural language statements. As one example, such rules or preferences (preference scores) may include rules/preferences relating to permitted movement of a vehicle, such as traffic rules, or of a robot, e.g. related to permitted (or forbidden) or preferable rules relating to safe movements or types of task. Such rules/preferences may include rules/preferences relating to decisions to be made to ensure safe behavior of the mechanical agent, e.g., to inhibit damage to the mechanical agent or to a human.

Thus, each request may relate to an action to be performed by the mechanical agent, e.g., an action that is under consideration by the control system. For example, a request can define an action to be performed by the mechanical agent, e.g., in the form of a question such as "Do I turn left?" or "Is it safe for the agent to turn left?". As another example, a request can ask what action is to be performed by the mechanical agent, e.g., "Which way should the mechanical agent turn?". In the case of a robot, the request can relate to a sub-task of a series of sub-tasks that are to be performed to perform a task, e.g., "What do I do next?" or "Do I pick up object X?". The sub-tasks may themselves comprise a series of primitive actions for moving parts of the robot, e.g., to open grippers.

In general, the request can include a natural language description that defines information the reply from the system software is to provide. That is, the request can explicitly or implicitly determine what is required from the reply.

The reply to the request may be used to control the mechanical agent in the real world environment. More specifically, the reply may be used to control an action to be performed by the mechanical agent. As one example, the reply may inhibit an action that would otherwise be performed, i.e., the response may determine whether or not an action defined by the request is performed. As another example the reply may define an action to be performed, e.g., where the request implicitly or explicitly requests an action to be determined.

In such implementations, obtaining the input sequence can include obtaining one or more observations of the real world environment which, because the environment includes the mechanical agent, potentially includes one or more observations of the mechanical agent. The observations may be obtained from one or more sensors that may, but need not be, sensors of the mechanical agent. As described above, the observations may include still or moving images, and/or other sensor data from one or more sensors sensing a state of the environment or mechanical agent. As used herein "images" includes LIDAR point clouds.

In some agent control implementations, the agent may be a human agent and the environment may be a real-world environment. For example the agent can be a human user of a digital assistant such as a smart speaker, smart display, or some other device that is used to instruct the user to perform actions. The input sequence may define a task, which may be any real-world task that the user wishes to perform. The input sequence may comprise observations that may be obtained from an observation capture subsystem, e.g. a monitoring system such as a video camera or sound capture system, to capture visual observations of the user performing the task. The output sequence may represent instructions in the form of, e.g., text, image, video, or audio data such as speech, that guide the user in performing the task.

Training datasets

There are many suitable training datasets available, depending on the task to be performed. Just as some examples these include, for text: WebLI (Web Language Image, Chen et al. arXiv:2305.18565v1). Some examples for images include: the Visual Genome dataset for Visual Question Answering (Krishna et al., arXiv:1602.07332); Objects365 (Shao et al., "Objects365: A large-scale, high-quality dataset for object detection", IEEE/CVF international conference on computer vision, pages 8430-8439); Open Images V4 (Kuznetsova et al., arXiv:1811.00982); the SBU dataset (Ordonez et al. "Im2Text: Describing Images Using 1 Million Captioned Photographs", NeurIPS 2011); the Conceptual Captions datasets, e.g. V1 (2M images) or V2 (10M images) (Sharma et al., "Conceptual Captions: A Cleaned, Hypernymed, Image Alt-text Dataset For Automatic Image Captioning", ACL 2018); and Kinetics for video (Kay et al., arXiv:1705.06950). An example for audio data is AudioSet (Gemmeke et al., "Audio set: An ontology and human-labeled dataset for audio events," ICASSP, IEEE, 2017, pp. 776-780). An example training dataset for agent (robot) control is described in Ebert et al., arXiv:2109.13396.

In general a training dataset for a particular task may comprise task-specific training examples that have been manually generated by a human being and/or task-specific training data may be generated automatically using existing tools. For example an OCR (Optical Character Recognition) task dataset may be generated by applying an OCR tool to a corpus of images; or an object detection task that requires generating object bounding-box coordinates may be generated by applying an existing object detection tool, such as a trained neural network, to a corpus of images; or a set of aligned image and text representations may be generated using ALIGN (Jia et al., arXiv:2102.05918); or instruction-annotated robot trajectories may be obtained as described in Brohan et al., arXiv:2212.06817, in either the real-world or in simulation.

Certain novel aspects of the subject matter of this specification are set forth in the claims below.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Further aspects of the disclosure may be appreciated from the following clauses:

E1. A computer-implemented method of fine-tuning weights of a machine learning model to perform a task, the method comprising:

obtaining a pre-trained machine learning model comprising a layer with an associated weight matrix;
obtaining training data associated with the task, the training data comprising training data elements;
processing the training data elements to obtain embeddings of the training data elements;
obtaining a fine-tuning matrix, wherein the fine-tuning matrix is block diagonal and comprises a plurality of blocks;
obtaining a weight update matrix, wherein the weight update matrix is a product of the fine-tuning matrix with projection matrices, the projection matrices chosen to project each block of the plurality of blocks onto a respective subspace of a fusion frame;
for each of the embeddings, processing the embedding using the weight matrix and the weight update matrix to obtain an output;
processing the outputs to define values of an objective function;
optimising the objective function by updating the elements of the fine-tuning matrix, keeping the weight matrix and the projection matrices constant, to obtain a trained fine-tuning matrix that corresponds to the optimised objective function;
obtaining a trained weight update matrix, wherein the trained weight update matrix is a product of the trained fine-tuning matrix with the projection matrices; and
subsequently updating the weight matrix based on the trained weight update matrix to obtain a fine-tuned weight matrix.

E2. The method of clause E1, wherein the blocks of the fine-tuning matrix are generated and processed separately, such that the weight update matrix comprises a sum of components, each corresponding to a respective block;

wherein for each embedding, processing the embedding using the weight matrix and the weight update matrix to obtain an output comprises multiplying the embedding by a sum of the weight matrix and each respective component of the weight update matrix in turn to obtain a respective output;
wherein processing the outputs to define values of an objective function comprises processing the respective outputs to define values of a respective objective function associated with each component;
wherein optimising each respective objective function by updating the elements of the fine-tuning matrix comprises updating only the elements of the respective block to obtain a respective trained component of the weight update matrix; and
wherein updating the weight matrix based on the trained weight update matrix comprises adding each respective trained component of the weight update matrix to the weight matrix in turn.

E3. The method of clause E1 or E2, wherein the task is a natural language processing task, and wherein obtaining the pre-trained machine learning model comprises obtaining a machine learning model trained to process task descriptions comprising natural language prompts.

E4. The method of clause E1 or E2, wherein the task is a visual processing task, and wherein obtaining the pre-trained machine learning model comprises obtaining a machine learning model trained to process task descriptions comprising visual prompts.

E5. The method of any preceding clause, wherein the fine-tuning matrix is a sparse matrix.

E6. The method of any preceding clause, wherein obtaining the fine-tuning matrix comprises randomly generating the fine-tuning matrix.

E7. The method of clause E6, wherein obtaining the fine-tuning matrix comprises generating the fine-tuning matrix based on a random sparsity pattern.

E8. The method of any preceding clause, wherein the fusion frame is a tight fusion frame.

E9. The method of any preceding clause, wherein each block is a 2 x 2 matrix.

E10. The method of any preceding clause, wherein the objective function is optimised by a gradient-based method.

E11. The method of any preceding clause, the method implemented on a plurality of computing devices, wherein optimising the objective function comprises:

maintaining a shared copy of the fine-tuning matrix in a shared data store;
implementing a set of workers on the plurality of computing devices, each worker being implemented on one of the computing devices, each worker being allocated a respective block, each worker being configured to:

obtain a local copy of the respective block;
optimise the objective function by updating only components of the respective block; and
update the value of the respective block in the shared data store to the new value; and

combining the new values of each block of the fine-tuning matrix to obtain the trained fine-tuning matrix.

E12. The method of clause E11, wherein the one or more computing devices comprise one or more hardware accelerator units that each perform processing tasks associated with a respective block.

E13. The method of any preceding clause, wherein obtaining the pre-trained machine learning model comprises training the pre-trained machine learning model.

E14. The method of any preceding clause, wherein obtaining the pre-trained machine learning model comprises receiving the weight matrix from another computing device as part of a request for fine-tuning, the method further comprising transmitting the fine-tuned weight matrix to the other computing device.

E15. The method of clause E14, wherein the request for fine-tuning further comprises the training data.

E16. The method of any preceding clause, wherein the pre-trained machine learning model comprises a Transformer neural network.

E17. A machine learning model fine-tuned using the method of any preceding clause.

E18. A method of using a machine learning model to perform a task, the method comprising:

obtaining an input associated with the task; and
processing the input using a machine learning model fine-tuned by the method of any of clauses E1-E16 to generate an output that represents a result of the task.

E19. A method of using a machine learning model to perform a task, the method comprising:

obtaining an input associated with the task; and
processing the input using a machine learning model to generate an output that represents a result of the task, wherein the machine learning model has been fine-tuned by:

representing an update to the model in a set of subspaces forming a fusion frame;
adapting the representation using training data associated with the task; and
fine-tuning the model based on the adapted representation.

E20. A system comprising:

one or more computers; and
one or more storage devices communicatively coupled to the one or more computers, wherein the one or more storage devices store instructions that, when executed by the one or more computers, cause the one or more computers to perform the operations of the respective method of any one of clauses E1-E16.

E21. One or more non-transitory computer storage media storing instructions that when executed by one or more computers cause the one or more computers to perform the operations of the respective method of any one of clauses E1-E16.

## Claims

1. A computer-implemented method of fine-tuning weights of a machine learning model to perform a task, the method comprising:

obtaining a pre-trained machine learning model comprising a layer with an associated weight matrix;
obtaining training data associated with the task, the training data comprising training data elements;
processing the training data elements to obtain embeddings of the training data elements;
obtaining a fine-tuning matrix, wherein the fine-tuning matrix is block diagonal and comprises a plurality of blocks;
obtaining a weight update matrix, wherein the weight update matrix is a product of the fine-tuning matrix with projection matrices, the projection matrices chosen to project each block of the plurality of blocks onto a respective subspace of a fusion frame;
for each of the embeddings, processing the embedding using the weight matrix and the weight update matrix to obtain an output;
processing the outputs to define values of an objective function;
optimising the objective function by updating the elements of the fine-tuning matrix, keeping the weight matrix and the projection matrices constant, to obtain a trained fine-tuning matrix that corresponds to the optimised objective function;
obtaining a trained weight update matrix, wherein the trained weight update matrix is a product of the trained fine-tuning matrix with the projection matrices; and
subsequently updating the weight matrix based on the trained weight update matrix to obtain a fine-tuned weight matrix.

2. The method of claim 1, wherein the blocks of the fine-tuning matrix are generated and processed separately, such that the weight update matrix comprises a sum of components, each corresponding to a respective block;

   wherein for each embedding, processing the embedding using the weight matrix and the weight update matrix to obtain an output comprises multiplying the embedding by a sum of the weight matrix and each respective component of the weight update matrix in turn to obtain a respective output;
   wherein processing the outputs to define values of an objective function comprises processing the respective outputs to define values of a respective objective function associated with each component;
   wherein optimising each respective objective function by updating the elements of the fine-tuning matrix comprises updating only the elements of the respective block to obtain a respective trained component of the weight update matrix; and
   wherein updating the weight matrix based on the trained weight update matrix comprises adding each respective trained component of the weight update matrix to the weight matrix in turn.

3. The method of claim 1 or 2, wherein updating the weight matrix based on the trained weight update matrix comprises scaling the trained weight update matrix by a scaling factor that depends on a dimension of the weight matrix, optionally wherein the scaling factor is $\frac{\alpha}{\sqrt{mn}}$, where $\alpha$ is a scalar hyperparameter and m and n are dimensions of the weight matrix.

4. The method of any preceding claim, wherein either the task is a natural language processing task, wherein obtaining the pre-trained machine learning model comprises obtaining a machine learning model trained to process task descriptions comprising natural language prompts; or
   the task is a visual processing task, wherein obtaining the pre-trained machine learning model comprises obtaining a machine learning model trained to process task descriptions comprising visual prompts.

5. The method of any preceding claim, wherein the fine-tuning matrix is a sparse matrix.

6. The method of any preceding claim, wherein obtaining the fine-tuning matrix comprises randomly generating the fine-tuning matrix, optionally wherein obtaining the fine-tuning matrix comprises generating the fine-tuning matrix based on a random sparsity pattern.

7. The method of any preceding claim, wherein the fusion frame is a tight fusion frame.

8. The method of any preceding claim, the method implemented on a plurality of computing devices, wherein optimising the objective function comprises:

   maintaining a shared copy of the fine-tuning matrix in a shared data store;
   implementing a set of workers on the plurality of computing devices, each worker being implemented on one of the computing devices, each worker being allocated a respective block, each worker being configured to:

   obtain a local copy of the respective block;
   optimise the objective function by updating only components of the respective block; and
   update the value of the respective block in the shared data store to the new value; and

   combining the new values of each block of the fine-tuning matrix to obtain the trained fine-tuning matrix, optionally wherein the one or more computing devices comprise one or more hardware accelerator units that each perform processing tasks associated with a respective block.

9. The method of any preceding claim, wherein obtaining the pre-trained machine learning model comprises receiving the weight matrix from another computing device as part of a request for fine-tuning, the method further comprising transmitting the fine-tuned weight matrix to the other computing device, optionally wherein the request for fine-tuning further comprises the training data.

10. The method of any preceding claim, wherein the pre-trained machine learning model comprises a Transformer neural network.

11. A machine learning model fine-tuned using the method of any preceding claim.

12. A method of using a machine learning model to perform a task, the method comprising:

   obtaining an input associated with the task; and
   processing the input using a machine learning model fine-tuned by the method of any of claims 1-10 to generate an output that represents a result of the task.

13. A method of using a machine learning model to perform a task, the method comprising:

   obtaining an input associated with the task; and
   processing the input using a machine learning model to generate an output that represents a result of the task, wherein the machine learning model has been fine-tuned by:

      representing an update to the model in a set of subspaces forming a fusion frame;
      adapting the representation using training data associated with the task; and
      fine-tuning the model based on the adapted representation;

   in particular wherein either:

      the task is a natural language task, and the input and the output represent text in a natural language;
      the task is a speech recognition task, the input represents spoken words, and the output represents text;
      the task is an image generation task, the input represents text, and the output represents images or video;
      the task is an image processing task, the input represents image or video, and the output represents text;
      the input represents actions to be taken by an agent, and the output comprises a modified sequence of actions, wherein the agent is a mechanical agent; or
      the input represents an observation of a real-world environment and the output represents actions to be taken by a mechanical agent in the real-world environment.

14. A system comprising:

   one or more computers; and
   one or more storage devices communicatively coupled to the one or more computers, wherein the one or more storage devices store instructions that, when executed by the one or more computers, cause the one or more computers to perform the operations of the respective method of any one of claims 1-10.

15. One or more non-transitory computer storage media storing instructions that when executed by one or more computers cause the one or more computers to perform the operations of the respective method of any one of claims 1-10.

FIG. 1

FIG. 2A

FIG. 2B

FIG. 2C

300

S302 — Obtaining a pre-trained machine learning model comprising a layer with an associated weight matrix

S304 — Obtaining training data associated with the task, the training data comprising training data elements

S306 — Processing the training data elements to obtain embeddings of the training data elements

S308 — Obtaining a fine-tuning matrix, wherein the fine-tuning matrix is block diagonal and comprises a plurality of blocks

S310 — Obtaining a weight update matrix, wherein the weight update matrix is a product of the fine-tuning matrix with projection matrices, the projection matrices chosen to project each block of the plurality of blocks onto a respective subspace of a fusion frame

S312 — For each of the embeddings, processing the embedding using the weight matrix and the weight update matrix to obtain an output

S314 — Processing the outputs to define values of an objective function

S316 — Optimising the objective function by updating the elements of the fine-tuning matrix, keeping the weight matrix and the projection matrices constant, to obtain a trained fine-tuning matrix that corresponds to the optimised objective function

S318 — Obtaining a trained weight update matrix, wherein the trained weight update matrix is a product of the trained fine-tuning matrix with the projection matrices

S320 — Subsequently updating the weight matrix based on the trained weight update matrix to obtain a fine-tuned weight matrix

FIG. 3

400

S402 — Obtaining a pre-trained machine learning model comprising a layer with an associated weight matrix

S404 — Obtaining training data associated with the task, the training data comprising training data elements

S406 — Processing the training data elements to obtain embeddings of the training data elements

S408 — Obtaining a fine-tuning matrix, wherein the fine-tuning matrix is block diagonal and comprises a plurality of blocks, wherein the blocks of the fine-tuning matrix are generated and processed separately, such that the weight update matrix comprises a sum of components, each corresponding to a respective block

S410 — Obtaining a weight update matrix, wherein the weight update matrix is a product of the fine-tuning matrix with projection matrices, the projection matrices chosen to project each block of the plurality of blocks onto a respective subspace of a fusion frame

S412 — For each of the embeddings, multiplying the embedding by a sum of the weight matrix and each respective component of the weight update matrix in turn to obtain a respective output

S414 — Processing the respective outputs to define values of a respective objective function associated with each component

S416 — Optimising each respective objective function by updating only the elements of the respective block of the fine-tuning matrix, keeping the weight matrix and the projection matrices constant, to obtain a respective trained component of a weight update matrix

S418 — Subsequently updating the weight matrix based on the trained weight update matrix to obtain a fine-tuned weight matrix, comprising adding each respective trained component of the weight update matrix to the weight matrix in turn

FIG. 4

500

| | |
|---|---|
| S502 — Maintaining a shared copy of the fine-tuning matrix in a shared data store | Obtain a local copy of the respective block — S505a |
| S504 — Implementing a set of workers on the plurality of computing devices, each worker being implemented on one of the computing devices, each worker being allocated a respective block, each worker being configured to: | Optimise the objective function by updating only components of the respective block — S505b |
| | Update the value of the respective block in the shared data store to the new value — S505c |
| S506 — Combining the new values of each block of the fine-tuning matrix to obtain the trained fine-tuning matrix | |

FIG. 5

600

| Model | Method | #params | SST-2 | MRPC | CoLA | QNLI | RTE | STS-B | Avg. |
|---|---|---|---|---|---|---|---|---|---|
| Roberta-base | Full finetune* | 125M | 94.8 | 90.2 | 63.6 | 92.8 | 78.7 | 91.2 | 85.2 |
| | LoRA* | 0.3M | 95.1 | 89.7 | 63.4 | 93.3 | 78.4 | 91.5 | 85.2 |
| | FourierFT | 0.024M | 94.2 | 90.0 | 63.8 | 92.2 | 79.1 | 90.8 | 85.0 |
| | FrameFT | 0.024M | 94.3 | 92.3 | 66.8 | 92.4 | 79.8 | 90.9 | 86.1 |
| Roberta-large | Full finetune* | 125M | 96.4 | 90.9 | 68.0 | 94.7 | 86.6 | 92.4 | 88.2 |
| | LoRA* | 0.8M | 96.2 | 90.2 | 68.2 | 94.8 | 85.2 | 92.3 | 88.2 |
| | FourierFT | 0.048M | 96.0 | 90.9 | 67.1 | 94.4 | 87.4 | 91.9 | 88.0 |
| | FrameFT | 0.048M | 96.2 | 92.6 | 69.8 | 93.4 | 88.1 | 91.9 | 88.7 |

FIG. 6

| Model | Method | #Params | OxfordPets | StanfordCars | CIFAR10 | DTD | EuroSAT | FGVC | RESISC45 | CIFAR100 | Avg. |
|---|---|---|---|---|---|---|---|---|---|---|---|
| Vit-B | LinearProbe* | – | 90.28 | 25.76 | 96.41 | 69.77 | 88.72 | 17.44 | 74.22 | 84.28 | 68.36 |
| | Full finetune* | 85.8M | 93.14 | 79.78 | 98.92 | 77.68 | 99.05 | 54.84 | 96.13 | 92.38 | 86.49 |
| | LoRA* | 581K | 93.19 | 45.38 | 98.78 | 74.95 | 98.44 | 25.16 | 92.70 | 92.02 | 77.58 |
| | FourierFT | 72K | 93.21 | 46.11 | 98.58 | 75.09 | 98.29 | 27.51 | 91.97 | 91.20 | 77.75 |
| | FourierFT | 239K | 93.05 | 56.36 | 98.69 | 77.30 | 98.78 | 32.44 | 94.26 | 91.45 | 80.29 |
| | FrameFT | 24K | 93.71 | 70.84 | 98.50 | 77.80 | 98.52 | 44.45 | 92.30 | 90.80 | 83.36 |
| | FrameFT | 120K | 93.55 | 78.16 | 98.50 | 79.96 | 98.91 | 52.35 | 94.10 | 90.90 | 85.80 |
| ViT-L | LinearProbe* | – | 91.11 | 37.91 | 97.78 | 73.33 | 92.64 | 24.62 | 82.02 | 84.28 | 72.96 |
| | Full finetune* | 303.3M | 94.43 | 88.90 | 99.15 | 81.79 | 99.04 | 68.25 | 96.43 | 93.58 | 90.20 |
| | LoRA* | 1.57M | 94.82 | 73.25 | 99.13 | 81.79 | 98.63 | 42.32 | 94.71 | 94.87 | 84.94 |
| | FourierFT | 144K | 94.46 | 69.56 | 99.10 | 80.83 | 98.65 | 39.92 | 93.86 | 93.31 | 83.71 |
| | FourierFT | 480K | 94.84 | 79.14 | 99.08 | 81.88 | 98.66 | 51.28 | 95.20 | 93.37 | 86.68 |
| | FrameFT | 48K | 94.27 | 78.48 | 99.02 | 79.94 | 98.49 | 52.63 | 93.72 | 92.68 | 86.15 |
| | FrameFT | 240K | 94.20 | 82.83 | 98.90 | 81.54 | 98.87 | 59.63 | 94.96 | 92.71 | 87.95 |

FIG. 7

| Model | Method | ARC-c | ARC-e | BoolQ | HellaSwag | OBQA | PIQA | RTE | WinoGrande | Avg. |
|---|---|---|---|---|---|---|---|---|---|---|
| Llama-2-7b | LoRA | 45.82 | 77.02 | 78.81 | 58.08 | 35.2 | 78.83 | 61.01 | 70.72 | 63.18 |
| | FourierFT | 45.73 | 77.74 | 78.75 | 58.07 | 34.4 | 78.51 | 61.37 | 69.38 | 62.99 |
| | FrameFT | 45.22 | 77.40 | 78.69 | 58.09 | 35.2 | 79.00 | 62.45 | 69.93 | 63.24 |
| Llama-2-13b | LoRA | 50.77 | 80.35 | 81.44 | 61.13 | 36.0 | 79.38 | 69.68 | 72.61 | 66.42 |
| | FourierFT | 49.74 | 79.92 | 80.89 | 60.95 | 34.2 | 79.22 | 65.34 | 72.30 | 65.32 |
| | FrameFT | 50.26 | 80.26 | 80.92 | 60.86 | 36.0 | 79.05 | 62.45 | 72.45 | 65.28 |
| Gemma-2-2B | LoRA | 48.63 | 79.76 | 76.61 | 55.85 | 31.6 | 78.94 | 62.09 | 68.19 | 62.70 |
| | FourierFT | 47.61 | 79.55 | 74.40 | 55.68 | 32.8 | 78.40 | 64.62 | 68.98 | 62.75 |
| | FrameFT | 49.15 | 80.81 | 69.79 | 55.46 | 30.8 | 78.78 | 66.79 | 67.40 | 62.37 |
| Gemma-2-9B | LoRA | 64.76 | 88.22 | 86.39 | 62.96 | 36.2 | 82.48 | 70.40 | 75.30 | 70.83 |
| | FourierFT | 64.25 | 87.88 | 86.54 | 63.11 | 36.4 | 81.66 | 71.12 | 73.64 | 70.57 |
| | FrameFT | 62.97 | 87.42 | 83.98 | 62.48 | 36.2 | 81.77 | 67.51 | 75.30 | 69.70 |
| Llama-3.1-8B | LoRA | 55.38 | 83.38 | 82.08 | 61.73 | 35.2 | 81.23 | 74.01 | 75.53 | 68.56 |
| | FourierFT | 52.39 | 81.78 | 81.80 | 60.95 | 35.0 | 80.58 | 72.92 | 74.51 | 67.49 |
| | FrameFT | 53.33 | 82.24 | 81.38 | 60.81 | 33.6 | 80.58 | 71.12 | 74.27 | 67.16 |

800

FIG. 8

## EUROPEAN SEARCH REPORT

**Application Number**

EP 26 15 5548

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIJAY LINGAM ET AL: "SVFT: Parameter-Efficient Fine-Tuning with Singular Vectors", ARXIV.ORG CORNELL UNIVERSITY LIBRARY, 201 OLIN LIBRARY CORNELL UNIVERSITY ITHACA, NY 14853, 30 May 2024 (2024-05-30), XP091772809, | 1-7,9-15 | INV.<br>G06N3/0475<br>G06N3/082<br>G06N3/096 |
| A | * Abstract to Section 3.2 * | 8 | |

-----

**TECHNICAL FIELDS SEARCHED (IPC)**

G06N

The present search report has been drawn up for all claims

| Place of search | Date of completion of the search | Examiner |
|---|---|---|
| The Hague | 29 April 2026 | Nourestani, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VASWANI et al.** Attention is all you need. *31st Conference on Neural Information Processing Systems*, 2017
- **BROWN et al.** Language models are few-shot learners. *Conference on Neural Information Processing Systems*, 2020
- **ALAYRAC et al.** *arXiv:2204.14198*
- **JIA et al.** *arXiv:2102.05918*
- **CHEN et al.** *arXiv:2209.06794*
- **CHEN et al.** *arXiv:2305.18565*
- **DRIESS et al.** *arXiv:2303.03378*
- **BROHAN et al.** *arXiv:2212.06817*
- **BROHAN et al.** *arXiv:2307.15818*
- **CHEN et al.** Web Language Image. *arXiv:2305.18565v1*
- **KRISHNA et al.** *arXiv:1602.07332*
- **SHAO et al.** Objects365: A large-scale, high-quality dataset for object detection. *IEEE/CVF international conference on computer vision*, 8430-8439
- **KUZNETSOVA et al.** *arXiv:1811.00982*
- **ORDONEZ et al.** Im2Text: Describing Images Using 1 Million Captioned Photographs. *NeurIPS*, 2011
- **SHARMA et al.** Conceptual Captions: A Cleaned, Hypernymed, Image Alt-text Dataset For Automatic Image Captioning. *ACL*, 2018
- **KAY et al.** *arXiv:1705.06950*
- **GEMMEKE et al.** Audio set: An ontology and human-labeled dataset for audio events. *ICASSP, IEEE*, 2017, 776-780
- **EBERT et al.** *arXiv:2109.13396*